# EUROPÄISCHE PATENTSCHRIFT

(11) **EP 2 582 733 B1**
(45) Veröffentlichungstag und Bekanntmachung des Hinweises auf die Patenterteilung: **04.06.2014**
(21) Anmeldenummer: 11725103.3
(22) Anmeldetag: 16.06.2011
(51) Int. Cl.: C08F 220/28, C11D 3/22, C11D 3/00

(54) **POLYMERE MIT SACCHARID-SEITENGRUPPEN UND IHRE VERWENDUNG**
POLYMERS COMPRISING SACCHARIDE SIDE GROUPS AND USE THEREOF
POLYMÈRES À GROUPES LATÉRAUX SACCHARIDE ET LEURS APPLICATIONS

(30) Priorität: 17.06.2010 EP 10166409
(43) Veröffentlichungstag der Anmeldung: 24.04.2013
(73) Patentinhaber: BASF SE, 67056 Ludwigshafen (DE)
(72) Erfinder: KELLER, Harald, 67069 Ludwigshafen (DE); REN, Liqun, 68163 Mannheim (DE); ETTL, Roland, 68804 Altlussheim (DE); ESPER, Claudia, 67271 Kindenheim (DE)
(86) Internationale Anmeldenummer: PCT/EP2011/059987
(87) Internationale Veröffentlichungsnummer: WO 2011/157777

(56) Entgegenhaltungen:
- EP-A1- 1 086 686
- WO-A1-2004/099273
- DE-A1- 19 727 362

## Beschreibung

Die vorliegende Erfindung betrifft Polymere mit Saccharid-Seitengruppen und ihre Verwendung als Vergrauungsinhibitoren in Textilwaschmitteln und als antimikrobielle Beschichtung sowie Textilwaschmittelzusammensetzungen, die die Polymere enthalten.

Waschmittel enthalten neben den für den Waschprozess unverzichtbaren Inhaltsstoffen wie Tensiden und Buildermaterialien in der Regel weitere Waschhilfsstoffe. Zu derartigen Hilfsstoffen gehören auch Substanzen, welche der Wäschefaser schmutzabstoßende Eigenschaften verleihen und das Schmutzablösevermögen der übrigen Waschmittelbestandteile unterstützen. Derartige schmutzablösevermögende Substanzen werden oft als "Soil-Release"-Wirkstoffe oder wegen ihres Vermögens, die behandelte Oberfläche, zum Beispiel der Faser, schmutzabstoßend auszurüsten, als "Soil-Repellents" bezeichnet.

Unter dem Begriff "Vergrauen" wird die Graufärbung von Textilien beim Waschen verstanden, die unter anderem durch ein Wiederaufziehen von bereits losgelöstem Schmutz auf das Gewebe in feinerer Verteilung bewirkt wird. Das Wiederaufziehen wird wahrscheinlich durch elektrostatische Kräfte ausgelöst. Das Ausmaß des Wiederaufziehens ist unter anderem abhängig von Gewebe- und Schmutzart, vom Verschmutzungsgrad des Gewebes, von der Wassermenge des Waschprozesses und vom Grad der mechanischen Bewegung in der Waschtrommel.

Schmutzablösevermögende und/oder vergrauungsinhibierende Copolymere wie auch ihr Einsatz in Waschmitteln sind seit langer Zeit bekannt. Wegen ihrer chemischen Ähnlichkeit zeigen die bekannten Copolymere besondere Affinität zu Polyesterfasern.

Bakterielle Infektionen stellen im Zusammenhang mit medizinischen Werkzeugen und Geräten, Implantatmaterialien, Wundschutzfolien und Verbandsmaterialien ein großes Problem dar. Ausgelöst werden die bakteriellen Infektionen durch die Adhäsion von oberflächenaktiven Bakterien und der daraus folgenden Biofilmentwicklung vor allem auf hydrophoben Oberflächen. Die Adhäsion der Bakterien auf Oberflächen beruht zum einen auf unspezifischen Wechselwirkungen wie elektrostatischen Wechselwirkungen, Van-der-Waals-Kräften und Säure-Base-Wechselwirkungen und zum anderen auf spezifischen Wechselwirkungen wie Rezeptor-Liganden-Bindungen. Die Oberfläche pathogener Bakterien ist mit Adhesinen bedeckt, d. h. Proteinen, die die Anhaftung an Oberflächen unterstützen. Die Oberflächenbeschaffenheit der Materialien wie Rauhigkeit und Oberflächenspannung sind entscheidende Kriterien für die Besiedlung von Oberflächen. Aus diesem Grund ist es wichtig, durch eine Modifikation der Oberflächen die Anzahl adhärierender Bakterien und damit die Plaquebildung und die Infektion anliegender Gewebe zu minimieren.

Die WO 90/10023 beschreibt ein Copolymer eines N-(Meth)acryloylglycosylamins und eines (Meth)acrylamids. Die Copolymere sollen zum Anbinden von Antigenen in ELI-SA-Tests geeignet sein.

Der Erfindung liegt die Aufgabe zugrunde, Polymere bereitzustellen, die hohe Affinität zu anorganischen Oberflächen, wie Metallen oder mineralischen Werkstoffen, oder hydrophilen Fasern, wie Baumwolle, zeigen und sich zur Modifizierung der Oberflächeneigenschaften dieser Materialien eignen.

Der Erfindung liegt weiter die Aufgabe zugrunde, schmutzablösevermögende und/oder vergrauungsinhibierende Wirkstoffe bereitzustellen, die eine hohe Affinität zu hydrophilen Fasern, wie insbesondere Baumwolle, zeigen.

Der Erfindung liegt weiter die Aufgabe zugrunde, Polymere bereitzustellen, die die Gefahr einer mikrobiellen Besiedlung damit beschichteter Materialien minimieren.

Die Aufgabe wird erfindungsgemäß gelöst durch ein wasserlösliches oder wasserdispergierbares Copolymer, wie es in Anspruch 1 definiert ist, wobei der Gewichtsanteil der ethylenisch ungesättigten Monomere mit einer Saccharid-Seitengruppe vorzugsweise 35 bis 90 Gew.-%, insbesondere 50 bis 85 Gew.-%, beträgt.

Unter hydrophilen ethylenisch ungesättigten Monomeren werden solche verstanden, die eine Wasserlöslichkeit von wenigstens 50 g/l bei 25 °C aufweisen.

Die erfindungsgemäßen Polymere sind, gegebenenfalls nach Neutralisation, wasserlöslich oder wasserdispergierbar, d. h. sie sind im Wesentlichen linear und nicht vernetzt.

Das hydrophile ethylenisch ungesättigte Monomer ist vorzugsweise ausgewählt unter
b1) Methylacrylat;
b2) anionischen/anionogen Monomeren;
b3) kationischen/kationogenen Monomeren;
b4) Monomeren mit einer Hydroxyalkyl-Seitengruppe;
b5) Monomeren mit einer Polyether-Seitengruppe;
b6) N-Vinylverbindungen; und
Kombinationen davon.

Davon sind anionische/anionoge Monomere, Monomere mit einer Hydroxyalkyl-Seitengruppe und Monomere mit einer Polyether-Seitengruppe und Kombinationen davon bevorzugt.

Die Gewichtsanteile der Einheiten einpolymerisierter Monomere sind vorliegend als Gewichtsanteile, bezogen auf das Gesamtgewicht der Einheiten aller einpolymerisierter Monomere im Copolymer angegeben.

Im Allgemeinen enthalten erfindungsgemäße Copolymere
a) 5 bis 95 Gew.-%, vorzugsweise 35 bis 90 Gew.-%, insbesondere 50 bis 85 Gew.-%, Einheiten wenigstens eines ethylenisch ungesättigten Monomers mit einer Saccharid-Seitengruppe,
b) 95 bis 5 Gew.-%, vorzugsweise 15 bis 50 Gew.-%, Einheiten wenigstens eines von (Meth)acrylamid verschiedenen, hydrophilen ethylenisch ungesättigten Monomers, und
c) 0 bis 40 Gew.-%, vorzugsweise 5 bis 20 Gew.-%, Einheiten wenigstens eines von a) und b) verschiedenen ethylenisch ungesättigten Monomers.

Die erfindungsgemäßen Copolymere zeigen im Allgemeinen hohe Elektrolytstabilität und hohe Kolloidstabilität in heißem Wasser. Sie zeigen hohe Affinität zu verschiedenen Oberflächen, wie Baumwolle, Glas, Keramik, Metall, wie Edelstahl, anorganischen Materialien, wie Calciumsilikat oder Calciumcarbonat.

Die Copolymere basieren auf ungiftigen Ausgangsstoffen aus erneuerbaren Quellen und sind biologisch abbaubar.

Ethylenisch ungesättigte Monomere mit einer Saccharid-Seitengruppe sind Verbindungen mit einer ethylenisch ungesättigten Gruppe, wie z. B. einer (Meth)acryl-, Vinyl- oder Allylgruppe, an die über einen Linker ein Saccharidrest kovalent gebunden ist. Als Saccharidrest wird ein Rest mit wenigstens drei Hydroxylgruppen, vorzugsweise wenigstens vier Hydroxylgruppen, angesehen, die an benachbarte (aufeinander folgende) Kohlenstoffatome gebunden sind, wobei eine oder mehrere Hydroxlgruppen Bestandteil einer glycosidischen Bindung zu weiteren Saccharideinheiten sein kann. Der Saccharidrest leitet sich vorzugsweise von einem Saccharid aus einer natürlichen Quelle oder einem Derivat davon ab, wie einem Zuckeralkohol, einer Zuckersäure oder einem Glycosamin.

Bei dem Saccharidrest kann es sich um einen Monosaccharid-, Disaccharid- oder Oligosaccharidrest handeln. Unter Oligosacchariden werden Verbindungen mit 3 bis 20 Saccharid-Wiederholungseinheiten verstanden. Bevorzugte Oligosaccharide sind ausgewählt unter Tri-, Tetra-, Penta-, Hexa-, Hepta-, Octa, Nona- und Decasacchariden, bevorzugt Saccharide mit 3 bis 9 Wiederholungseinheiten. Die Verknüpfung innerhalb der Ketten erfolgt vorzugsweise 1,4-glycosidisch und gegebenenfalls 1,6-glycosidisch.

Ein Monosaccharidrest ist vorzugsweise ein von einer Aldo-Hexose, insbesondere von Arabinose, Ribose, Xylose, Mannose, Galactose und insbesondere Glukose, abgeleiteter Rest.

Ein Disaccharidrest ist vorzugsweise ein von Lactose, Maltose, Isomaltose abgeleiteter Rest.

Ein Oligosaccharidrest ist z. B. ein von Maltotriose, Maltotetraose und Maltopentaose abgeleiteter Rest oder ein abgeleiteter Rest von einer durch Hydrolyse eines Polysaccharids, wie Hydrolyse von Cellulose oder Stärke, erhältlichen Saccharidgemisches. Derartige Mischungen sind durch Hydrolyse eines Polysaccharids, beispielsweise enzymatische Hydrolyse von Cellulose oder Stärke bzw. sauer katalysierte Hydrolyse von Cellulose oder Stärke, erhältlich. Pflanzliche Stärke besteht aus Amylose und Amylopektin als Hauptbestandteil der Stärke. Amylose besteht aus überwiegend unverzweigten Ketten von Glucosemolekülen, die 1,4-glycosidisch miteinander verknüpft sind. Amylopektin besteht aus verzweigten Ketten, in denen es neben den 1,4-glycosidischen Verknüpfungen zusätzlich 1,6-glycosidische Verknüpfungen gibt, die zu Verzweigungen führen. Erfindungsgemäß eignen sich auch Hydrolyseprodukte von Amylopektin als Ausgangsverbindung für das erfindungsgemäße Verfahren und sind mit von der Definition Oligosaccharide umfasst.

Bevorzugte ethylenisch ungesättigte Monomere mit einer Saccharid-Seitengruppe entsprechen einer der Formeln (Ia), (Ib) oder (Ic) 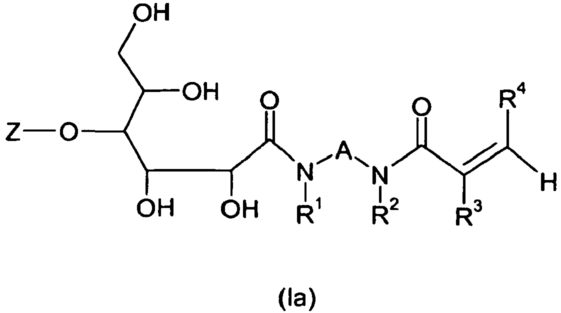 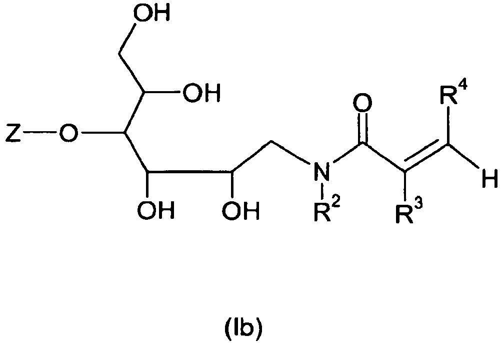 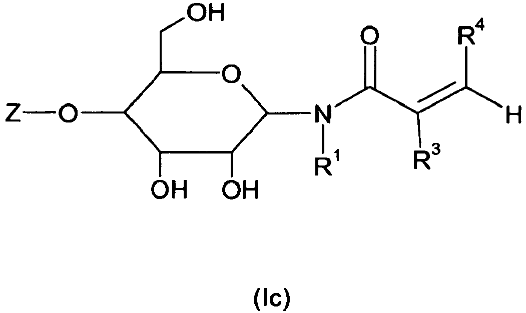 worin
- Z: für H oder einen Saccharidrest steht;
- A: für C₂-C₁₀-Alkylen, das gegebenenfalls durch Sauerstoff in Etherfunktion unterbrochen sein kann und/oder durch ein oder zwei Carboxyl-, Hydroxyl- und/oder Carboxamidgruppen substituiert sein kann, oder einen cycloaliphatischen Rest steht;
- R¹ und R²: unabhängig voneinander für H, C₁-C₄-Alkyl oder C₁-C₄-Hydroxyalkyl stehen;
- R³: für H oder Methyl steht;
- R⁴: für H, COOH oder COO-M⁺ steht; und
- M⁺: für ein Alkalimetallion oder ein Ammoniumion, vorzugsweise Na⁺, K⁺ oder NH₄⁺, steht.
A steht für C₂-C₁₀-Alkylen, das gegebenenfalls durch Sauerstoff in Etherfunktion unterbrochen sein kann und/oder durch ein oder zwei Carboxyl-, Hydroxyl- und/oder Carboxamidgruppen substituiert sein kann, oder einen cycloaliphatischen Rest. Vorzugsweise steht A für C₂-C₆-Alkylen, wie 1,2-Ethandiyl, 1,2-Propandiyl, 1,3-Propandiyl, 1,4-Butandiyl, 1,5-Pentandiyl, 1,6-Hexandiyl, oder einen cycloaliphatischen Rest, wie 1,2-Cyclopentandiyl, 1,3-Cyclopentandiyl, 1,2-Cyclohexandiyl, 1,3-Cyclohexandiyl oder 1,4-Cyclohexandiyl.

R¹ und R² stehen unabhängig voneinander für Wasserstoff, C₁-C₄-Alkyl oder C₁-C₄-Hydroxyalkyl, vorzugsweise für Wasserstoff, Methyl, Ethyl oder Hydroxyethyl, insbesondere für Wasserstoff oder Methyl.

Z steht für H oder einen Saccharidrest. Bei dem Saccharidrest kann es sich um einen Monosaccharid-, Disaccharid- oder Oligosaccharidrest handeln. Der Saccharidrest ist in der Regel über eine glykosidische Bindung an das Molekül gebunden.

Sofern Z für einen Saccharidrest steht, weist dieser vorzugsweise die allgemeine Formel auf 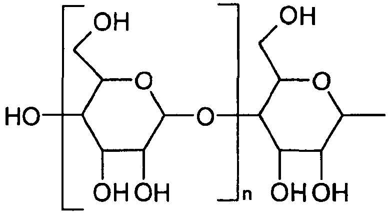 in der n für die Zahl 0, 1, 2, 3, 4, 5, 6, 7 oder 8 steht.

Verbindungen der Formel (Ia) sind erhältlich, indem man ein Umsetzungsprodukt eines Polyhydroxysäurelactons und aliphatischem Diamin mit dem Anhydrid einer einfach ungesättigten Carbonsäure umsetzt, vgl. die internationale Patentanmeldung PCT/EP 2010/054208.

Unter Polyhydroxysäurelacton sind Lactone von lediglich am anomeren Kohlenstoff oxidierten Sacchariden aus natürlicher und synthetischer Quelle zu verstehen. Derartige Polyhydroxysäurelactone können auch als Lactone von Aldonsäuren bezeichnet werden. Die Polyhydroxysäurelactone können einzeln oder in ihren Mischungen eingesetzt werden.

Die Saccharide werden nur am anomeren Zentrum selektiv oxidiert. Verfahren zur selektiven Oxidation sind allgemein bekannt und werden beispielsweise beschrieben in J. Lönnegren, I. J. Goldstein, Methods Enzymology, 242 (1994) 116. So kann man die Oxidation mit Jod im alkalischen Milieu oder mit Kupfer(II)-Salzen durchführen.

Geeignete aliphatische Diamine können linear, cyclisch oder verzweigt sein.

Bevorzugt werden aliphatische C₂-C₈-Diamine und cycloaliphatische Diamine eingesetzt, wie 1,2-Diaminoethan, 1,3-Diaminopropan, 1, 5-Diaminopentan, 1,6-Diaminohexan, N-Methyl-1,3-Diaminopropan, N-Methyl-1,2-Diaminoethan, 2,2-Dimethylpropan-1,3-diamin, Diamino-cyclohexan, Isophorondiamin und 4,4'-Diaminodicyclohexyl-methan.

Die Umsetzung der Diamine mit den Lactonen wird in H. U. Geyer, Chem. Ber. 1964, 2271 beschrieben. Dabei kann das molare Verhältnis von aliphatischem Diamin zum Polyhydroxysäurelacton in einem weiten Bereich variieren, wie z. B. im Verhältnis 5: 1 bis 0,3: 1, insbesondere 3: 1 bis 0,4: 1, schwanken. Bevorzugt wird das aliphatische Diamin zum Polyhydroxysäurelacton in einem molaren Verhältnis von etwa 2:1 bis 0,5: 1 gegeben.

Die Anhydride einer einfach ungesättigten Carbonsäure sind vorzugsweise ausgewählt unter Acrylsäureanhydrid, Methacrylsäureanhydrid sowie Maleinsäureanhydrid.

Verbindungen der Formel (Ib) sind erhältlich, durch reduktive Aminierung der entsprechenden reduzierenden Saccharide und anschließender Acrylierung mit Acrylsäurechlorid wie beschrieben bei R. L. Whistler, J. Org. Chem. 26, 1961, 1583-1588.

Verbindungen der Formel (Ic) sind z. B. nach dem in der WO 90/10023 beschriebenen Verfahren erhältlich. Hierzu setzt man einen reduzierenden Zucker in Lösung mit Ammoniumhydrogencarbonat zu einem Glycosylamin um, das mit einem reaktiven Derivat von (Meth)acrylsäure zum N-(Meth)acryloylglycosylamin umgesetzt wird.

In einem besonders zweckmäßigen Verfahren geht man so vor, dass man einen reduzierenden Zucker mit einem primären aliphatischen Amin oder Ammoniak im wässrigen Medium umsetzt und ohne Zwischenisolierung mit dem Anhydrid einer einfach ungesättigten Carbonsäure umsetzt, vgl. die internationale Patentanmeldung PCT/EP 2010/054211.

In bestimmten Ausführungsformen enthalten die erfindungsgemäßen Copolymere Einheiten von Methylacrylat, z. B. in einem Gewichtsanteil von 0 bis 40 Gew.-%, vorzugsweise 5 bis 20 Gew.-%.

In bestimmten Ausführungsformen enthalten die erfindungsgemäßen Copolymere Einheiten anionogener/anionischer Monomere, z. B. in einem Gewichtsanteil von 0 bis 95 Gew.-%, vorzugsweise 15 bis 50 Gew.-%. Unter "anionischen Monomeren" werden ethylenisch ungesättigte Monomere mit anionischen Gruppen verstanden. Unter "anionogen Monomeren" werden Monomere mit einer funktionelle Gruppe verstanden, die in Abhängigkeit vom pH-Wert in wässrigem Medium in eine anionische Gruppe überführbar ist und z. B. bei pH 12 zu mehr als 90% in anionischer Form vorliegt.

Zu den anionischer Monomeren zählen die Salze der monoethylenisch ungesättigten Carbonsäuren, Sulfonsäuren, Phosphonsäuren und Gemische davon, insbesondere die Natrium-, Kalium- und Ammoniumsalze.

Zu den anionogenen/anionischen Monomeren zählen monoethylenisch ungesättigte Mono- und Dicarbonsäuren mit 3 bis 25 vorzugsweise 3 bis 6 C-Atomen, die auch in Form ihrer Salze oder Anhydride eingesetzt werden können. Beispiele hierfür sind Acrylsäure, Methacrylsäure, Ethacrylsäure, Crotonsäure, Maleinsäure, Maleinsäureanhydrid, Itaconsäure, Citraconsäure, Mesaconsäure, Glutaconsäure, Aconitsäure und Fumarsäure. Zu den anionogener/anionischer Monomeren zählen weiterhin die Halbester von monoethylenisch ungesättigten Dicarbonsäuren mit 4 bis 10 vorzugsweise 4 bis 6 C-Atomen, z. B. von Maleinsäure wie Maleinsäuremonomethylester. Zu den anionogener/anionischer Monomeren zählen auch monoethylenisch ungesättigte Sulfonsäuren und Phosphonsäuren, beispielsweise Vinylsulfonsäure, Allylsulfonsäure, Sulfoethylacrylat, Sulfoethylmethacrylat, Sulfopropylacrylat, Sulfopropylmethacrylat, 2-Hydroxy-3-acryloxypropylsulfonsäure, 2-Hydroxy-3-methacryloxypropylsulfonsäure, Styrolsulfonsäure, 2-Acrylamido-2-methylpropansulfonsäure, Vinylphosphonsäure und Allylphosphonsäure.

Als anionogene/anionische Monomere sind ethylenisch ungesättigte Carbonsäuren bevorzugt, insbesondere Acrylsäure, Methacrylsäure, Itaconsäure und Maleinsäure. Davon ist Methacrylsäure besonders bevorzugt.

In bestimmten Ausführungsformen enthalten die erfndungsgemäßen Copolymere Einheiten kationischer/kationogener Monomere, z. B. in einem Gewichtsanteil von 0 bis 95 Gew.-%, vorzugsweise 5 bis 50 Gew.-%. Unter "kationogenen/kationischen Monomeren" werden ethylenisch ungesättigte Monomere mit kationogenen/kationischen Gruppen verstanden. Unter "kationoger Gruppe" wird eine funktionelle Gruppe verstanden, die in Abhängigkeit vom pH-Wert in wässrigem Medium in eine kationische Gruppe überführbar ist. Bevorzugt handelt es sich bei den kationogenen und/oder kationischen Gruppen um stickstoffhaltige Gruppen, wie Aminogruppen sowie quaternäre Ammoniumgruppen. Geladene kationische Gruppen lassen sich aus Aminstickstoffen entweder durch Protonierung, z. B. mit Carbonsäuren, wie Milchsäure, oder Mineralsäuren, wie Phosphorsäure, Schwefelsäure und Salzsäure, oder durch Quaternisierung, z. B. mit Alkylierungsmitteln, wie C₁-C₄-Alkylhalogeniden oder -sulfaten, erzeugen. Beispiele solcher Alkylierungsmittel sind Ethylchlorid, Ethylbromid, Methylchlorid, Methylbromid, Dimethylsulfat und Diethylsulfat.

Geeignet als kationogene Monomere sind z. B. N,N-Dialkylaminoalkyl(meth)acrylate, wie N,N-Dimethylaminomethyl(meth)acrylat, N,N-Dimethylaminoethyl(meth)acrylat, N,N-Diethylaminoethyl(meth)acrylat, N,N-Dimethylaminopropyl(meth)acrylat, N,N-Diethylaminopropyl(meth)acrylat, N,N-Dimethylaminocyclohexyl(meth)acrylat etc.

Geeignet als kationogene Monomere sind weiterhin N,N-Dialkylaminoalkyl-(meth)acrylamide, wie N-[2-(dimethylamino)ethyl]acrylamid, N-[2-(dimethylamino)-ethyl]methacrylamid, N-[3-(dimethylamino)propyl]acrylamid, N-[3-(dimethylamino)-propyl]methacrylamid, N-[4-(dimethylamino)butyl]acrylamid, N-[4-(dimethylamino)-butyl]methacrylamid, N-[2-(diethylamino)ethyl]acrylamid, N-[2-(diethylamino)-ethyl]methacrylamid, N-[4-(dimethylamino)cyclohexyl]acrylamid und N-[4-(dimethylamino)cyclohexyl]methacrylamid. Bevorzugt sind N,N-Dimethylamino-propylacrylat, N,N-Dimethylaminopropylmethacrylat, N-[3-(dimethylamino)-propyl]acrylamid und N-[3-(dimethylamino)propyl]methacrylamid.

Weitere kationogene Monomere sind solche mit primären oder sekundären Aminogruppen, z. B. Estern ethylenisch ungesättigter Mono- und Dicarbonsäuren mit Aminoalkoholen, Amiden ethylenisch ungesättigter Mono- und Dicarbonsäuren mit Diaminen und Gemischen davon.

Geeignet sind z. B. die Ester von ethylenisch ungesättigten Mono- und Dicarbonsäuren mit Aminoalkoholen, vorzugsweise C₂-C₁₂-Aminoalkoholen. Diese können vorzugsweise am Aminstickstoff C₁-C₈-monoalkyliert sein. Als Säurekomponente dieser Ester eignen sich z. B. Acrylsäure, Methacrylsäure, Fumarsäure, Maleinsäure, Itaconsäure, Crotonsäure, Maleinsäureanhydrid, Monobutylmaleat und Gemische davon. Bevorzugt werden Acrylsäure, Methacrylsäure und deren Gemische eingesetzt. Bevorzugt sind N-Methylaminoethyl(meth)acrylat, N-Ethylaminoethyl(meth)acrylat, N-(n-Propyl)aminoethyl(meth)acrylat, N-(n-Butyl)aminoethyl(meth)acrylat, tert.-Butylaminoethyl-(meth)acrylat. Besonders bevorzugt ist N-tert.-Butylaminoethylmethacrylat.

Geeignet sind weiterhin die Amide der zuvor genannten ethylenisch ungesättigten Mono- und Dicarbonsäuren mit Diaminen, welche mindestens eine primäre oder sekundäre Aminogruppe aufweisen. Geeignet sind z. B. N-Methylaminoethyl(meth)acrylamid, N-Ethylaminoethyl(meth)acrylamid, N-(n-Propyl)aminoethyl(meth)acrylamid, N-(n-Butyl)aminoethyl(meth)acrylamid und N-tert.-Butylaminoethyl(meth)acrylamid.

Geeignete kationogene Monomere sind weiterhin vinyl- und allylsubstituierte Stickstoffheterocyclen, wie Vinylimidazol, N-Vinyl-2-alkylimidazole, z. B. N-Vinyl-2-methylimidazol sowie 2- und 4-Vinylpyridin, 2- und 4-Allylpyridin, und die Salze davon.

Geeignete kationische Monomere sind solche mit wenigstens einer quaternären Ammoniumgruppe. Als Beispiele kationischer Monomere seien genannt N-Trimethylammoniumethylacrylamidchlorid, N-Trimethylammoniumethylmethacrylamidchlorid, N-Trimethylammoniumethylmethacrylesterchlorid, N-Trimethylammoniumethylacrylesterchlorid, Trimethylammoniumethylacrylamidmethosulfat, Trimethylammoniumethylmethacrylamidmethosulfat, N-Ethyldimethylammoniumethylacrylamidethosulfat, N-Ethyldimethylammoniumethylmethacrylamidethosulfat, Trimethylammoniumpropylacrylamidchlorid, Trimethylammoniumpropylmethacrylamidchlorid, Trimethylammoniumpropylacrylamidmethosulfat, Trimethylammoniumpropylmethacrylamidmethosulfat und N-Ethyldimethylammoniumpropylacrylamidethosulfat. Bevorzugt ist Trimethylammoniumpropylmethacrylamidchlorid.

In bestimmten Ausführungsformen enthalten die erfindungsgemäßen Copolymere Einheiten von Monomeren mit einer Hydroxyalkyl-Seitengruppe, z. B. in einem Gewichtsanteil von 0 bis 95 Gew.-%, vorzugsweise 15 bis 70 Gew.-%. Vorzugsweise ist dieses Monomer ausgewählt unter Estern ethylenisch ungesättigter Mono- und Dicarbonsäuren mit Diolen oder Amiden ethylenisch ungesättigter Mono- und Dicarbonsäuren mit Aminoalkoholen.

Geeignete Monomere sind 2-Hydroxyethylacrylat, 2-Hydroxyethylmethacrylat, 2-Hydroxyethylethacrylat, 2-Hydroxypropylacrylat, 2-Hydroxypropylmethacrylat, 3-Hydroxypropylacrylat, 3-Hydroxypropylmethacrylat, 3-Hydroxybutylacrylat, 3-Hydroxybutylmethacrylat, 4-Hydroxybutylacrylat, 4-Hydroxybutylmethacrylat, 6-Hydroxyhexylacrylat, 6-Hydroxyhexylmethacrylat, 3-Hydroxy-2-ethylhexylacrylat und 3-Hydroxy-2-ethylhexylmethacrylat.

Geeignete Monomere sind weiterhin 2-Hydroxyethylacrylamid, 2-Hydroxyethylmethacrylamid, 2-Hydroxyethylethacrylamid, 2-Hydroxypropylacrylamid, 2-Hydroxypropylmethacrylamid, 3-Hydroxypropylacrylamid, 3-Hydroxypropylmethacrylamid, 3-Hydroxybutylacrylamid, 3-Hydroxybutylmethacrylamid, 4-Hydroxybutylacrylamid, 4-Hydroxybutylmethacrylamid, 6-Hydroxyhexylacrylamid, 6-Hydroxyhexylmethacrylamid, 3-Hydroxy-2-ethylhexylacrylamid und 3-Hydroxy-2-ethylhexylmethacrylamid.

In bestimmten Ausführungsformen enthalten die erfindungsgemäßen Copolymere Einheiten eines nichtionischen ethylenisch ungesättigten Monomers mit einer Polyether-Seitengruppe, z. B. in einem Gewichtsanteil von 0 bis 95 Gew.-%, vorzugsweise 15 bis 70 Gew.-%.

Geeignete, nichtionische, ethylenisch ungesättigte Monomere mit einer Polyether-Seitengruppe sind an sich bekannt. Es handelt sich z. B. um
(a) Urethangruppen-haltige Umsetzungsprodukte eines monoethylenisch ungesättigten Isocyanats und einem Polyether,
(b) Ester ethylenisch ungesättigter Carbonsäuren und Polyether,
(c) Vinyl- oder Allylether von Polyethern.

Als Polyether eignen sich vorzugsweise polyalkoxylierte C₁-C₃₀-Alkohole wie Fettalkoholalkoxylate oder Oxoalkoholalkoxylate. Pro Mol Alkohol verwendet man wenigstens 2, z. B. 2 bis 100, vorzugsweise 3 bis 20 Mol mindestens eines C₂-C₄-Alkylenoxids. Unterschiedliche Alkylenoxideinheiten können blockweise angeordnet oder statistisch verteilt vorliegen. Vorzugsweise setzt man als Alkylenoxid Ethylenoxid und/oder Propylenoxid ein.

In bevorzugten Ausführungsformen weist das nichtionische ethylenisch ungesättigte Monomer mit einer Polyether-Seitengruppe die allgemeine Formel auf

R-O-(CH₂-CHR'-O)ₙ-CO-CR"=CH₂

worin R für H oder C₁-C₃₀-Alkyl, vorzugsweise C₁-C₂₂-Alkyl, steht,
R' für Wasserstoff oder Methyl steht, vorzugsweise für Wasserstoff,
R" für Wasserstoff oder Methyl steht, vorzugsweise für Methyl, und
n für eine ganze Zahl von 2 bis 100, vorzugsweise 3 bis 50, steht.

Die Wiederholungseinheiten in der Klammer leiten sich von Ethylenoxid oder Propylenoxid ab. Die Bedeutung von R' ist in jeder Wiederholungseinheit unabhängig von anderen Wiederholungseinheiten. Unterschiedliche Alkylenoxideinheiten können blockweise angeordnet oder statistisch verteilt vorliegen.

In bestimmten Ausführungsformen enthalten die erfindungsgemäßen Copolymere Einheiten von N-Vinylverbindungen, z. B. in einem Gewichtsanteil von 0 bis 40 Gew.-%, vorzugsweise 5 bis 20 Gew.-%. Vorzugsweise sind die N-Vinylverbindungen ausgewählt unter N-Vinyllactamen, N-Vinylamiden gesättigter C₁-C₈-Monocarbonsäuren. Dazu zählen z. B. N-Vinylpyrrolidon, N-Vinylpiperidon, N-Vinylcaprolactam, N-Vinyl-5-methyl-2-pyrrolidon, N-Vinyl-5-ethyl-2-pyrrolidon, N-Vinyl-6-methyl-2-piperidon, N-Vinyl-6-ethyl-2-piperidon, N-Vinyl-7-methyl-2-caprolactam, N-Vinyl-7-ethyl-2-caprolactam. Geeignete offenkettige N-Vinylamidverbindungen sind beispielsweise N-Vinylformamid, N-Vinyl-N-methylformamid, N-Vinylacetamid, N-Vinyl-N-methylacetamid, N-Vinyl-N-ethylacetamid, N-Vinylpropionamid, N-Vinyl-N-methylpropionamid und N-Vinylbutyramid.

Weitere hydrophile ethylenisch ungesättigte Monomere sind weiterhin Acrylsäureamid und Methacrylsäureamid sowie N-C₁-C₈-Alkyl- und N,N-Di-(C₁-C₈-)alkylamide ethylenisch ungesättigter Monocarbonsäuren. Dazu zählen N-Methyl(meth)acrylamid, N-Ethyl(meth)acrylamid, N-Propyl(meth)acrylamid, N-Isopropyl(meth)acrylamid, N-(n-Butyl)(meth)acrylamid, N-(tert-Butyl)(meth)acrylamid, N,N-Dimethyl(meth)acrylamid, N,N-Diethyl(meth)acrylamid, Piperidinyl(meth)acrylamid und Morpholinyl(meth)acrylamid.

Gegebenenfalls enthalten die erfindungsgemäßen Copolymere außerdem Einheiten eines weiteren Monomers, das vorzugsweise ausgewählt ist unter Estern ethylenisch ungesättigter Mono- und Dicarbonsäuren mit C₁-C₃₀-Alkanolen, Estern von Vinylalkohol oder Allylalkohol mit C₁-C₃₀-Monocarbonsäuren, Vinylethern, Vinylaromaten, Vinylhalogeniden, Vinylidenhalogeniden, C₂-C₈-Monoolefinen, nicht aromatischen Kohlenwasserstoffen mit mindestens zwei konjugierten Doppelbindungen und Mischungen davon.

Geeignete Monomere sind dann Methylmethacrylat, Methylethacrylat, Ethyl(meth)-acrylat, Ethylethacrylat, n-Butyl(meth)acrylat, tert-Butyl(meth)acrylat, tert-Butylethacrylat, n-Octyl(meth)acrylat, 1,1,3,3-Tetramethylbutyl(meth)acrylat, Ethylhexyl(meth)acrylat, n-Nonyl(meth)acrylat, n-Decyl(meth)acrylat, n-Undecyl(meth)acrylat, Tridecyl(meth)acrylat, Myristyl(meth)acrylat, Pentadecyl(meth)acrylat, Palmityl(meth)acrylat, Heptadecyl(meth)acrylat, Nonadecyl(meth)acrylat, Arrachinyl(meth)acrylat, Behenyl(meth)acrylat, Lignocerenyl(meth)acrylat, Cerotinyl(meth)acrylat, Melissinyl(meth)acrylat, Palmitoleinyl(meth)acrylat, Oleyl(meth)-acrylat, Linolyl(meth)acrylat, Linolenyl(meth)acrylat, Stearyl(meth)acrylat, Lauryl(meth)acrylat und Mischungen davon. Bevorzugte Monomere sind C₁-C₄-Alkyl(meth)acrylate. In bestimmten Ausführungsformen enthalten die erfindungsgemäßen Copolymere Einheiten von Methylmethacrylat, z. B. in einem Gewichtsanteil von 0 bis 40 Gew.-%, vorzugsweise 5 bis 20 Gew.-%.

Geeignete Monomere sind weiterhin Vinylacetat, Vinylpropionat, Vinylbutyrat und Mischungen davon.

Geeignete Monomere sind weiterhin Ethylen, Propylen, Isobutylen, Butadien, Styrol, α-Methylstyrol, Acrylnitril, Methacrylnitril, Vinylchlorid, Vinylidenchlorid, Vinylfluorid, Vinylidenfluorid und Mischungen davon.

Die Herstellung der erfindungsgemäßen Copolymere erfolgt beispielsweise in Analogie zu den in "Ullmann's Enzyclopedia of Industrial Chemistry, Sixth Edition, 2000, Electronic Release, Stichwort: Polymerisation Process" allgemein beschriebenen Verfahren. Vorzugsweise erfolgt die (Co)polymerisation als radikalische Polymersiation in Form der Lösungs-, Suspensions-, Fällungs- oder Emulsionspolymerisation oder durch Polymerisation in Substanz, d. h. ohne Lösemittel. Besonders für die Herstellung der anionischen Copolymere kann man entweder direkt ein anionisches Monomer zur Polymerisation einsetzen oder zuerst ein anionogenes Monomer zur Polymerisation einsetzen und das erhaltene Copolymer dann nach der Polymerisation mit einer Base neutralisieren.

Zur Polymerisation wird ein geeigneter Polymerisationsinitiator verwendet. Thermisch aktivierbare radikalische Polymerisationsinitiatoren sind bevorzugt.

Geeignete thermisch aktivierbare radikalische Initiatoren sind vor allem solche des Peroxy- und Azotyps. Hierzu zählen unter anderem Wasserstoffperoxid, Peressigsäure, t-Butylhydroperoxid, Di-t-butylperoxid, Dibenzoylperoxid, Benzoylhydroperoxid, 2,4-Dichlorbenzoylperoxid, 2,5-Dimethyl-2,5-bis(hydroperoxy)hexan, Perbenzoesäure, t-Butylperoxypivalat, t-Butylperacetat, Dilauroylperoxid, Dicapryloylperoxid, Distearoylperoxid, Dibenzoylperoxid, Diisopropylperoxydicarbonat, Didecylperoxydicarbonat, Dieicosylperoxydicarbonat, Di-t-butylperbenzoat, Azobisisobutyronitril, 2,2'-Azobis-2,4-dimethylvaleronitril, wasserlösliche Azo-Initiator, z.B, 2,2'-Azobis[2-(2-imidazolin-2-yl)propan]dihydrochlorid, 2,2'-Azobis(2-methylpropionamidin)dihydrochlorid, 2,2'-Azobis(1-imino-1-pyrrolidino-2-ethylpropan)dihydrochlorid, 2,2'-Azobis[2-methyl-N-(2-hydroxyethyl)propionamid]; Ammoniumpersulfat, Kaliumpersulfat, Natriumpersulfat und Natriumperphosphat.

Die Persulfate (Peroxodisulfate), insbesondere Natriumpersulfat und wasserlösliche Azo-Initiator, insbesondere ,2'-Azobis[2-(2-imidazolin-2-yl)propane]dihydrochlorid, sind am meisten bevorzugt.

Bei der Durchführung der Polymerisation wird der Initiator in ausreichender Menge verwendet, um die Polymerisationsreaktion zu initiieren. Der Initiator wird üblicherweise in einer Menge von etwa 0,01 bis 3 Gew.-%, bezogen auf das Gesamtgewicht der eingesetzten Monomere, verwendet. Die Initiatormenge beträgt vorzugsweise etwa 0,05 bis 2 Gew.-% und insbesondere 0,1 bis 1 Gew.-%, bezogen auf das Gesamtgewicht der eingesetzten Monomere.

Gemäß einer anderen bevorzugten Herstellungsart erhält man das Copolymer durch Polymerisation eines Monomerengemisches in Gegenwart eines Redoxinitiatorsystems. Ein Redoxinitiatorsystem umfasst wenigstens eine Oxidationsmittelkomponente und wenigstens eine Reduktionsmittelkomponente, wobei im Reaktionsmedium vorzugsweise zusätzlich Schwermetallionen als Katalysator vorhanden sind, beispielsweise Cer-, Mangan- oder Eisen(II)-salze.

Geeignete Oxidationsmittelkomponenten sind beispielsweise Peroxide und/oder Hydroperoxide wie Wasserstoffperoxid, tert.-Butylhydroperoxid, Cumolhydroperoxid, Pinanhydroperoxid, Diisopropylphenylhydroperoxid, Dicyclohexylpercarbonat, Dibenzoylperoxid, Dilauroylperoxid und Diacetylperoxid. Wasserstoffperoxid und tert.-Butylhydroperoxid sind bevorzugt.

Geeignete Reduktionsmittelkomponenten sind Alkalimetallsulfite, Alkalimetalldithionite, Alkalimetallhyposulfite, Natriumhydrogensulfit, Rongalit C (Natriumformaldehydsulfoxylat), Mono- und Dihydroxyaceton, Zucker (z.B. Glucose oder Dextrose), Ascorbinsäure und ihre Salze, Acetonbisulfit-Addukt und/oder ein Alkalimetallsalz der Hydroxymethansulfinsäure. Ascorbinsäure ist bevorzugt.

Als Reduktionsmittelkomponente bzw. Katalysator eignen sich auch Eisen(II)-salze wie z.B. Eisen(II)-sulfat, Zinn(II)-salze wie z.B. Zinn(II)-chlorid, Titan(III)-salze wie Titan(III)-sulfat.

Die Einsatzmengen an Oxidationsmittel betragen 0,001 bis 5,0 Gew.-%, vorzugsweise von 0,005 bis 1,0 Gew.-% und besonders bevorzugt von 0,01 bis 0,5 Gew.-%, bezogen auf das Gesamtgewicht der eingesetzten Monomere. Reduktionsmittel werden in Mengen von 0,001 bis 2,0 Gew.-%, vorzugsweise von 0,005 bis 1,0 Gew.-% und besonders bevorzugt von 0,01 bis 0,5 Gew.-% eingesetzt, bezogen auf das Gesamtgewicht der eingesetzten Monomere.

Ein besonders bevorzugtes Redoxinitiatorsystem ist das System Natriumperoxodisulfat/Ascorbinsäure. Ein weiteres besonders Redoxinitiatorsystem ist das System t-Butylhydroperoxid/Wasserstoffperoxid/Ascorbinsäure, z. B. 0,001 bis 5,0 Gew.-% t-Butylhydroperoxid.

Die Polymerisation erfolgt vorzugsweise als Lösungspolymerisation.

Die Lösungspolymerisation erfolgt in der Regel in Wasser oder in einer Mischung von wenigstens einem organischen Lösungsmittel mit Wasser oder in einem organischen Lösungsmittel oder Lösungsmittelgemisch, vorzugsweise in Wasser oder in einer Mischung von wenigstens einem organischen Lösungsmittel mit Wasser. Geeignete organische Lösungsmittel sind solche, die mit Wasser zumindest begrenzt, insbesondere vollständig mischbar bei 20°C sind. Hierunter versteht man eine Mischbarkeit von wenigsten 10 Vol% Lösungsmittel insbesondere wenigstens 50 Vol% Lösungsmittel in Wasser bei 20°C. Beispielhaft seien C₁-C₃-Alkohole, z.B. Methanol, Ethanol, Propanol, Isopropanol, Ketone wie Aceton, Methylethylketon, Mono-, Oligo- oder Polyalkylenglykole oder -thioglykole, die C₂-C₆-Alkyleneinheiten aufweisen, wie Ethylenglykol, 1,2-oder 1,3-Propylenglykol, 1,2- oder 1,4-Butylenglykol, C₁-C₄-Alkylether von mehrwertigen Alkoholen, wie Ethylenglykolmonomethyl- oder -monoethylether, Diethylenglykolmonomethyl- oder -monoethylether, Diethylenglykolmonobutylether (Butyldiglykol) oder Triethylenglykolmonomethyl- oder -monoethylether, C₁-C₄-Alkylester von mehrwertigen Alkoholen, γ-Butyrolacton oder Dimethylsulfoxid oder Tetrahydrofuran genannt. Bevorzugt sind Mischungen der organischen Lösemittel mit Wasser, wobei der Wassergehalt bis zu 95 Gew.-% betragen kann. Besonders bevorzugt sind Gemische von Methanol mit Wasser.

Die Lösungspolymerisation erfolgt üblicherweise bei 35 bis 95 °C. Sie kann sowohl als batch-Prozess als auch in Form eines Zulaufverfahrens durchgeführt werden. Bevorzugt ist die Zulauffahrweise, bei dem man zumindest einen Teil des Polymerisationsinitiators und gegebenenfalls einen Teil der Monomeren vorlegt, auf Polymerisationstemperatur erhitzt und anschließend den Rest des Polymerisationsansatzes, üblicherweise über mehrere getrennte Zuläufe, von denen einer oder mehrere die Monomeren in reiner, gelöster oder emulgierter Form enthalten, kontinuierlich oder stufenweise unter Aufrechterhaltung der Polymerisation zuführt. Vorzugsweise erfolgt der Monomerzulauf in Form einer wässrigen Monomeremulsion. Parallel zum Monomerzulauf kann weiterer Polymerisationsinitiator zudosiert werden.

Gegebenenfalls können bei der Polymerisation Kettentransfermittel mitverwendet werden. Typische Kettentransfermittel umfassen Mercaptane wie etwa 2-Mercaptoethanol, Thioglycolsäure, n-Dodecylmercaptan und tert-Dodecylmercaptan, alpha-Methylstyrol-Dimer, 1-Phenylbuten-2-fluoren, Terpinol und Chloroform.

Die erfindungsgemäßen Copolymere eignen sich als schmutzablösevermögende und/oder vergrauungsinhibierende Wirkstoffe in Textilwaschmitteln.

Die erfindungsgemäßen Copolymere eignen sich außerdem als antimikrobielle Beschichtung.

Die erfindungsgemäße Beschichtung ist insbesondere zur Beschichtung von Materialoberflächen in der medizinisch-therapeutischen Anwendung geeignet, beispielsweise zur Beschichtung metallischer Implantate, von Wundschutzfolien und Verbandmaterial oder zur Beschichtung von medizinischen Werkzeugen und Geräten, wie Katheter. Im Bereich der Biotechnologie eignet sich die erfindungsgemäße Beschichtung insbesondere für den Apparatebau (z. B. Fermenter), zur Beschichtung von Dichtungen und zur Unterdrückung des Biofouling.

Die Erfindung betrifft außerdem eine Wasch- oder Reinigungsmittelzusammensetzung, die ein erfindungsgemäßes Copolymer enthält.

Neben dem Copolymer enthalten die Wasch- oder Reinigungsmittel Tensid(e), wobei anionische, nichtionische, kationische und/oder amphotere Tenside eingesetzt werden können. Bevorzugt sind aus anwendungstechnischer Sicht Mischungen aus anionischen und nichtionischen Tensiden. Der Gesamttensidgehalt des flüssigen Waschoder Reinigungsmittel beträgt vorzugsweise 5 bis 60 Gew.-% und besonders bevorzugt 15 bis 40 Gew.-%, bezogen auf das gesamte flüssige Wasch- oder Reinigungsmittel.

Als nichtionische Tenside werden vorzugsweise alkoxylierte, vorteilhafterweise ethoxylierte, insbesondere primäre Alkohole mit vorzugsweise 8 bis 18 C-Atomen und durchschnittlich 1 bis 12 Mol Ethylenoxid (EO) pro Mol Alkohol eingesetzt, in denen der Alkoholrest linear oder bevorzugt in 2-Stellung methylverzweigt sein kann bzw. lineare und methylverzweigte Reste im Gemisch enthalten kann, so wie sie üblicherweise in Oxoalkoholresten vorliegen. Insbesondere sind jedoch Alkoholethoxylate mit linearen Resten aus Alkoholen nativen Ursprungs mit 12 bis 18 C-Atomen, zum Beispiel aus Kokos-, Palm-, Talgfett- oder Oleylalkohol, und durchschnittlich 2 bis 8 EO pro Mol Alkohol bevorzugt. Zu den bevorzugten ethoxylierten Alkoholen gehören beispielsweise C₁₂-C₁₄-Alkohole mit 3 EO, 4 EO oder 7 EO, C₉-C₁₁-Alkohol mit 7 EO, C₁₃-C₁₅-Alkohole mit 3 EO, 5 EO, 7 EO oder 8 EO, C₁₂-C₁₈-Alkohole mit 3 EO, 5 EO oder 7 EO und Mischungen aus diesen, wie Mischungen aus C₁₂-C₁₄-Alkohol mit 3 EO und C₁₂-C₁₈-Alkohol mit 7 EO. Die angegebenen Ethoxylierungsgrade stellen statistische Mittelwerte dar, die für ein spezielles Produkt eine ganze oder eine gebrochene Zahl sein können. Bevorzugte Alkoholethoxylate weisen eine eingeengte Homologenverteilung auf (narrow range ethoxylates, NRE). Zusätzlich zu diesen nichtionischen Tensiden können auch Fettalkohole mit mehr als 12 EO eingesetzt werden. Beispiele hierfür sind Talgfettalkohol mit 14 EO, 25 EO, 30 EO oder 40 EO. Auch nichtionische Tenside, die EO- und PO-Gruppen zusammen im Molekül enthalten, sind einsetzbar. Hierbei können Blockcopolymere mit EO-PO-Blockeinheiten bzw. PO-EO-Blockeinheiten eingesetzt werden, aber auch EO-PO-EO-Copolymere bzw. PO-EO-PO-Copolymere. Selbstverständlich sind auch gemischt alkoxylierte Niotenside einsetzbar, in denen EO- und PO-Einheiten nicht blockweise, sondern statistisch verteilt sind. Solche Produkte sind durch gleichzeitige Einwirkung von Ethylen- und Propylenoxid auf Fettalkohole erhältlich.

Außerdem können als weitere nichtionische Tenside auch Alkylglykoside der allgemeinen Formel (1)

R¹O(G)ₓ (1)

eingesetzt werden, worin R¹ für einen primären geradkettigen oder methylverzweigten, insbesondere in 2-Stellung methylverzweigten aliphatischen Rest mit 8 bis 22, vorzugsweise 12 bis 18 C-Atomen steht und G für eine Glykosideinheit mit 5 oder 6 C-Atomen, vorzugsweise für Glucose, steht. Der Oligomerisierungsgrad x, der die Verteilung von Monoglykosiden und Oligoglykosiden angibt, ist eine beliebige Zahl zwischen 1 und 10; vorzugsweise liegt x bei 1,2 bis 1,4.

Eine weitere Klasse bevorzugt eingesetzter nichtionischer Tenside, die entweder als alleiniges nichtionisches Tensid oder in Kombination mit anderen nichtionischen Tensiden eingesetzt werden, sind alkoxylierte, vorzugsweise ethoxylierte oder ethoxylierte und propoxylierte Fettsäurealkylester, vorzugsweise mit 1 bis 4 Kohlenstoffatomen in der Alkylkette, insbesondere Fettsäuremethylester, wie sie beispielsweise in der japanischen Patentanmeldung JP 58/217598 beschrieben sind oder die vorzugsweise nach dem in der internationalen Patentanmeldung WO-A-90/13533 beschriebenen Verfahren hergestellt werden.

Auch nichtionische Tenside vom Typ der Aminoxide, beispielsweise N-Kokosalkyl-N,N-dimethylaminoxid und N-Talgalkyl-N,N-dihydroxyethylaminoxid, und der Fettsäurealkanolamide können geeignet sein. Die Menge dieser nichtionischen Tenside beträgt vorzugsweise nicht mehr als die der ethoxylierten Fettalkohole, insbesondere nicht mehr als die Hälfte davon.

Weitere geeignete Tenside sind Polyhydroxyfettsäureamide der Formel (2), 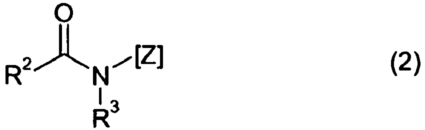 worin R²C(=O) für einen aliphatischen Acylrest mit 6 bis 22 Kohlenstoffatomen, R³ für Wasserstoff, einen Alkyl- oder Hydroxyalkylrest mit 1 bis 4 Kohlenstoffatomen und [Z] für einen linearen oder verzweigten Polyhydroxyalkylrest mit 3 bis 10 Kohlenstoffatomen und 3 bis 10 Hydroxylgruppen steht. Bei den Polyhydroxyfettsäureamiden handelt es sich um bekannte Stoffe, die üblicherweise durch reduktive Aminierung eines reduzierenden Zuckers mit Ammoniak, einem Alkylamin oder einem Alkanolamin und nachfolgende Acylierung mit einer Fettsäure, einem Fettsäurealkylester oder einem Fettsäurechlorid erhalten werden können.

Zur Gruppe der Polyhydroxyfettsäureamide gehören auch Verbindungen der Formel (3) 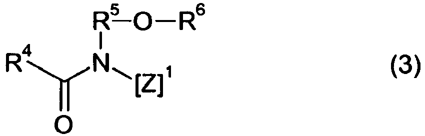 worin R⁴ für einen linearen oder verzweigten Alkyl- oder Alkenylrest mit 7 bis 12 Kohlenstoffatomen, R⁵ für einen linearen, verzweigten oder cyclischen Alkylenrest mit 2 bis 8 Kohlenstoffatomen oder einen Arylenrest mit 6 bis 8 Kohlenstoffatomen und R⁶ für einen linearen, verzweigten oder cyclischen Alkylrest oder einen Arylrest oder einen Oxy-Alkylrest mit 1 bis 8 Kohlenstoffatomen steht, wobei C₁-C₄-Alkyl- oder Phenylreste bevorzugt sind, und [Z]¹ für einen linearen Polyhydroxyalkylrest steht, dessen Alkylkette mit mindestens zwei Hydroxylgruppen substituiert ist, oder alkoxylierte, vorzugsweise ethoxylierte oder propoxylierte Derivate dieses Restes. [Z]¹ wird vorzugsweise durch reduktive Aminierung eines Zuckers erhalten, beispielsweise Glucose, Fructose, Maltose, Lactose, Galactose, Mannose oder Xylose. Die N-Alkoxy- oder N-Aryloxy-substituierten Verbindungen können dann beispielweise gemäß WO-A-95/07331 durch Umsetzung mit Fettsäuremethylestern in Gegenwart eines Alkoxids als Katalysator in die gewünschten Polyhydroxyfettsäureamide überführt werden.

Der Gehalt an nichtionischen Tensiden beträgt in den flüssigen Wasch- oder Reinigungsmitteln bevorzugt 1 bis 30 Gew.-%, vorzugsweise 7 bis 20 Gew.-% und insbesondere 9 bis 15 Gew.-%, jeweils bezogen auf das gesamte Mittel.

Als anionische Tenside werden beispielsweise solche vom Typ der Sulfonate und Sulfate eingesetzt. Als Tenside vom Sulfonat-Typ kommen dabei vorzugsweise C₉-C₁₃-Alkylbenzolsulfonate, Olefinsulfonate, d.h. Gemische aus Alken- und Hydroxyalkansulfonaten sowie Disulfonaten, wie man sie beispielsweise aus C₁₂-C₁₈-Monoolefinen mit end- oder innenständiger Doppelbindung durch Sulfonieren mit gasförmigem Schwefeltrioxid und anschließende alkalische oder saure Hydrolyse der Sulfonierungsprodukte erhält, in Betracht. Geeignet sind auch Alkansulfonate, die aus C₁₂-C₁₈-Alkanen beispielsweise durch Sulfochlorierung oder Sulfoxidation mit anschließender Hydrolyse bzw. Neutralisation gewonnen werden. Ebenso sind auch die Ester von α-Sulfofettsäuren (Estersulfonate), zum Beispiel die α-sulfonierten Methylester der hydrierten Kokos-, Palmkern- oder Talgfettsäuren geeignet.

Weitere geeignete Aniontenside sind sulfierte Fettsäureglycerinester. Unter Fettsäureglycerinestern sind die Mono-, Di- und Triester sowie deren Gemische zu verstehen, wie sie bei der Herstellung durch Veresterung von einem Monoglycerin mit 1 bis 3 Mol Fettsäure oder bei der Umesterung von Triglyceriden mit 0,3 bis 2 Mol Glycerin erhalten werden. Bevorzugte sulfierte Fettsäureglycerinester sind dabei die Sulfierprodukte von gesättigten Fettsäuren mit 6 bis 22 Kohlenstoffatomen, beispielsweise der Capronsäure, Caprylsäure, Caprinsäure, Myristinsäure, Laurinsäure, Palmitinsäure, Stearinsäure oder Behensäure.

Als Alk(en)ylsulfate werden die Alkali- und insbesondere die Natriumsalze der Schwefelsäurehalbester der C₁₂-C₁₈-Fettalkohole, beispielsweise aus Kokosfettalkohol, Talgfettalkohol, Lauryl-, Myristyl-, Cetyl- oder Stearylalkohol oder der C₁₀-C₂₀-Oxoalkohole und diejenigen Halbester sekundärer Alkohole dieser Kettenlängen bevorzugt. Weiterhin bevorzugt sind Alk(en)ylsulfate der genannten Kettenlänge, welche einen synthetischen, auf petrochemischer Basis hergestellten geradkettigen Alkylrest enthalten, die ein analoges Abbauverhalten besitzen wie die adäquaten Verbindungen auf der Basis von fettchemischen Rohstoffen. Aus waschtechnischem Interesse sind die C₁₂-C₁₆-Alkylsulfate und C₁₂-C₁₅-Alkylsulfate sowie C₁₄-C₁₅-Alkylsulfate bevorzugt. Auch 2,3-Alkylsulfate, welche beispielsweise gemäß den US-Patentschriften 3,234,258 oder 5,075,041 hergestellt werden und als Handelsprodukte der Shell Oil Company unter dem Namen DAN® erhalten werden können, sind geeignete Aniontenside.

Auch die Schwefelsäuremonoester der mit 1 bis 6 Mol Ethylenoxid ethoxylierten geradkettigen oder verzweigten C₇-C₂₁-Alkohole, wie 2-Methyl-verzweigte C₉-C₁₁-Alkohole mit im Durchschnitt 3,5 Mol Ethylenoxid (EO) oder C₁₂-C₁₈-Fettalkohole mit 1 bis 4 EO, sind geeignet. Sie werden in Reinigungsmitteln aufgrund ihres hohen Schaumverhaltens nur in relativ geringen Mengen, beispielsweise in Mengen von 1 bis 5 Gew.-%, eingesetzt.

Weitere geeignete Aniontenside sind auch die Salze der Alkylsulfobernsteinsäure, die auch als Sulfosuccinate oder als Sulfobernsteinsäureester bezeichnet werden und die Monoester und/oder Diester der Sulfobernsteinsäure mit Alkoholen, vorzugsweise Fettalkoholen und insbesondere ethoxylierten Fettalkoholen darstellen. Bevorzugte Sulfosuccinate enthalten C₈-C₁₈- Fettalkoholreste oder Mischungen aus diesen. Insbesondere bevorzugte Sulfosuccinate enthalten einen Fettalkoholrest, der sich von ethoxylierten Fettalkoholen ableitet. Dabei sind wiederum Sulfosuccinate, deren Fettalkohol-Reste sich von ethoxylierten Fettalkoholen mit enger Homologenverteilung ableiten, besonders bevorzugt. Ebenso ist es auch möglich, Alk(en)ylbernsteinsäure mit vorzugsweise 8 bis 18 Kohlenstoffatomen in der Alk(en)ylkette oder deren Salze einzusetzen.

Insbesondere bevorzugte anionische Tenside sind Seifen. Geeignet sind gesättigte und ungesättigte Fettsäureseifen, wie die Salze der Laurinsäure, Myristinsäure, Palmitinsäure, Stearinsäure, (hydrierten) Erucasäure und Behensäure sowie insbesondere aus natürlichen Fettsäuren, zum Beispiel Kokos-, Palmkern-, Olivenöl- oder Talgfettsäuren, abgeleitete Seifengemische.

Die anionischen Tenside einschließlich der Seifen können in Form ihrer Natrium-, Kalium- oder Ammoniumsalze sowie als lösliche Salze organischer Basen, wie Mono-, Dioder Triethanolamin, vorliegen. Vorzugsweise liegen die anionischen Tenside in Form ihrer Natrium- oder Kaliumsalze, insbesondere in Form der Natriumsalze vor.

Der Gehalt bevorzugter Wasch- oder Reinigungsmittel an anionischen Tensiden beträgt 2 bis 30 Gew.-%, vorzugsweise 2 bis 40 Gew.-% und insbesondere 5 bis 22 Gew.-%, jeweils bezogen auf das gesamte Mittel. Es ist besonders bevorzugt, dass die Menge an Fettsäureseife mindestens 2 Gew.-% und besonders bevorzugt mindestens 4 Gew.-% und insbesondere bevorzugt mindestens 6 Gew.-% beträgt.

Die Viskosität flüssiger Wasch- oder Reinigungsmittel kann mit üblichen Standardmethoden (beispielsweise Brookfield-Viskosimeter LVT-II bei 20 U/min und 20 °C, Spindel 3) gemessen werden und liegt vorzugsweise im Bereich von 100 bis 5000 mPas. Bevorzugte Mittel haben Viskositäten von 300 bis 4000 mPas, wobei Werte zwischen 1000 und 3000 mPas besonders bevorzugt sind.

Zusätzlich zu dem erfindungsgemäßen Copolymer und zu dem/den Tensid(en) können die Wasch oder Reinigungsmittel weitere Inhaltsstoffe enthalten, die die anwendungstechnischen und/oder ästhetischen Eigenschaften des Wasch- oder Reinigungsmittels weiter verbessern. In der Regel enthalten bevorzugte Mittel einen oder mehrere Stoffe aus der Gruppe der Gerüststoffe, Bleichmittel, Bleichaktivatoren, Enzyme, Elektrolyte, nichtwässrigen Lösungsmittel, pH-Stellmittel, Duftstoffe, Parfümträger, Fluoreszenzmittel, Farbstoffe, Hydrotrope, Schauminhibitoren, Silikonöle, Antiredepositionsmittel, optischen Aufheller, Vergrauungsinhibitoren, Einlaufverhinderer, Knitterschutzmittel, Farbübertragungsinhibitoren, antimikrobiellen Wirkstoffe, Germizide, Fungizide, Antioxidantien, Korrosionsinhibitoren, Antistatika, Bügelhilfsmittel, Phobier- und Imprägniermittel, Quell- und Schiebefestmittel sowie UV-Absorber.

Als Gerüststoffe bzw. Builder, die in den Wasch- oder Reinigungsmitteln enthalten sein können, sind insbesondere Silikate, Aluminiumsilikate (insbesondere Zeolithe), Carbonate, Salze organischer Di- und Polycarbonsäuren sowie Mischungen dieser Stoffe zu nennen.

Geeignete niedermolekulare Polycarboxylate als organische Builder sind beispielsweise:
C₄-C₂₀-Di-, -Tri- und -Tetracarbonsäuren wie z.B. Bernsteinsäure, Propantricarbonsäure, Butantetracarbonsäure, Cyclopentantetracarbonsäure und Alkyl- und Alkylenbernsteinsäuren mit C₂-C₁₆-Alkyl- bzw. -Alkylen-Resten;
C₄-C₂₀-Hydroxycarbonsäuren wie z.B. Äpfelsäure, Weinsäure, Gluconsäure, Glutarsäure, Citronensäure, Lactobionsäure und Saccharosemono-, -di- und -tricarbonsäure;
Aminopolycarboxylate wie z.B. Nitrilotriessigsäure, Methylglycindiessigsäure, Alanindiessigsäure, Ethylendiamintetraessigsäure und Serindiessigsäure;
Salze von Phosphonsäuren wie z.B. Hydroxyethandiphosphonsäure, Ethylendiamintetra(methylenphosphonat) und Diethylentriaminpenta(methylenphosphat).

Geeignete oligomere oder polymere Polycarboxylate als organische Builder sind beispielsweise:
Oligomaleinsäuren, wie sie beispielsweise in EP-A 0 451 508 und EP-A 0 396 303 beschrieben sind;
Co- und Terpolymere ungesättigter C₄-C₈-Dicarbonsäuren, wobei als Comonomere monoethylenisch ungesättigte Monomere
aus der Gruppe (i) in Mengen von bis zu 95 Gew.-%
aus der Gruppe (ii) in Mengen von bis zu 60 Gew.-%
aus der Gruppe (iii) in Mengen von bis zu 20 Gew.-%
einpolymerisiert enthalten sein können.

Als ungesättigte C₄-C₈-Dicarbonsäuren sind hierbei beispielsweise Maleinsäure, Fumarsäure, Itaconsäure und Citraconsäure (Methylmaleinsäure) geeignet. Bevorzugt ist Maleinsäure.

Die Gruppe (i) umfasst monoethylenisch ungesättigte C₃-C₈-Monocarbonsäuren wie z.B. Acrylsäure, Methacrylsäure, Crotonsäure und Vinylessigsäure. Bevorzugt werden aus der Gruppe (i) Acrylsäure und Methacrylsäure eingesetzt.

Die Gruppe (ii) umfasst monoethylenisch ungesättigte C₂-C₂₂-Olefine, Vinylalkylether mit C₁-C₈-Alkylgruppen, Styrol, Vinylester von C₁-C₈-Carbonsäure, (Meth)acrylamid und Vinylpyrrolidon. Bevorzugt werden aus der Gruppe (ii) C₂-C₆-Olefine, Vinylalkylether mit C₁-C₄-Alkylgruppen, Vinylacetat und Vinylpropionat eingesetzt.

Die Gruppe (iii) umfasst (Meth)acrylester von C₁-C₈-Alkoholen, (Meth)acrylnitril, (Meth)acrylamide, (Meth)acrylamide von C₁-C₈-Aminen, N-Vinylformamid und Vinylimidazol.

Falls die Polymeren der Gruppe (ii) Vinylester einpolymerisiert enthalten, können diese auch teilweise oder vollständig zu Vinylalkohol-Struktureinheiten hydrolysiert vorliegen. Geeignete Co- und Terpolymere sind beispielsweise aus US 3,887,806 sowie SE-A 43 13 909 bekannt.

Als Copolymere von Dicarbonsäuren eignen sich als organische Builder vorzugsweise:

Copolymere von Maleinsäure und Acrylsäure im Gewichtsverhältnis 10:90 bis 95:5, insbesondere bevorzugt solche im Gewichtsverhältnis 30:70 bis 90:10 mit Molmassen von 10000 bis 150000;

Terpolymere aus Maleinsäure, Acrylsäure und einem Vinylester einer C₁-C₃-Carbonsäure im Gewichtsverhältnis 10 (Maleinsäure) : 90 (Acrylsäure + Vinylester) bis 95 (Maleinsäure) : 10 (Acrylsäure + Vinylester), wobei das Gew.-Verhältnis von Acrylsäure zu Vinylester im Bereich von 20:80 bis 80:20 variieren kann, und besonders bevorzugt

Terpolymere aus Maleinsäure, Acrylsäure und Vinylacetat oder Vinylpropionat im Gewichtsverhältnis 20 (Maleinsäure) : 80 (Acrylsäure + Vinylester) bis 90 (Maleinsäure) : 10 (Acrylsäure + Vinylester), wobei das Gew.-Verhältnis von Acrylsäure zum Vinylester im Bereich von 30:70 bis 70:30 variieren kann;

Copolymere von Maleinsäure mit C₂-C₈-Olefinen im Molverhältnis 40:60 bis 80:20, wobei Copolymere von Maleinsäure mit Ethylen, Propylen oder Isobutan im Molverhältnis 50:50 besonders bevorzugt sind.

Pfropfpolymere ungesättigter Carbonsäuren auf niedermolekulare Kohlenhydrate oder hydrierte Kohlenhydrate, vgl. US 5,227,446, DE-A 44 15 623, DE-A 43 13 909, sind ebenfalls als organische Builder geeignet.

Geeignete ungesättigte Carbonsäuren sind hierbei beispielsweise Maleinsäure, Fumarsäure, Itaconsäure, Citraconsäure, Acrylsäure, Methacrylsäure, Crotonsäure und Vinylessigsäure sowie Mischungen aus Acrylsäure und Maleinsäure, die in Mengen von 40 bis 95 Gew.-%, bezogen auf die zu pfropfende Komponente, aufgepfropft werden.

Zur Modifizierung können zusätzlich bis zu 30 Gew.-%, bezogen auf die zu pfropfende Komponente, weitere monoethylenisch ungesättigte Monomere einpolymerisiert vorliegen. Geeignete modifizierende Monomere sind die oben genannten Monomere der Gruppen (ii) und (iii).

Als Pfropfgrundlage sind abgebaute Polysaccharide wie z.B. saure oder enzymatisch abgebaute Stärken, Inuline oder Zellulose, reduzierte (hydrierte oder hydrierend aminierte) abgebaute Polysaccharide wie z.B. Mannit, Sorbit, Aminosorbit und Glucamin geeignet sowie Polyalkylenglycole mit Molmassen bis zu Mw = 5000 wie z.B. Polyethylenglycole, Ethylenoxid/Propylenoxid- bzw. Ethylenoxid/Butylenoxid-Blockcopolymere, statistische Ethylenoxid/Popylenoxid- beziehungsweise Ethylenoxid/Butylenoxid-Copolymere, alkoxylierte ein- oder mehrbasische C₁-C₂₂-Alkohole, vgl. US 4,746,456.

Bevorzugt werden aus dieser Gruppe gepfropfte abgebaute beziehungsweise abgebaute reduzierte Stärken und gepfropfte Polyethylenoxide eingesetzt, wobei 20 bis 80 Gew.-% Monomere bezogen auf die Pfropfkomponente bei der Pfropfpolymerisation eingesetzt werden. Zur Pfropfung wird vorzugsweise eine Mischung von Maleinsäure und Acrylsäure im Gew.-Verhältnis von 90:10 bis 10:90 eingesetzt.

Polyglyoxylsäuren als organische Builder sind beispielsweise beschrieben in EP-B 0 001 004, US 5,399,286, DE-A 41 06 355 und EP-A 0 656 914. Die Endgruppen der Polyglyoxylsäuren können unterschiedliche Strukturen aufweisen. Polyamidocarbonsäuren und modifizierte Polyamidocarbonsäuren als organische Builder sind beispielsweise bekannt aus EP-A 0 454 126, EP-B 0 511 037, WO-A 94/01486 und EP-A 0 581 452.

Vorzugsweise verwendet man als organische Builder auch Polyasparaginsäure oder Cokondensate der Asparaginsäure mit weiteren Aminosäuren, C₄-C₂₅-Mono- oder - Dicarbonsäuren und/oder C₄-C₂₅-Mono- oder -Diamine. Besonders bevorzugt werden in phosphorhaltigen Säuren hergestellte, mit C₆-C₂₂-Mono- oder -Dicarbonsäuren beziehungsweise mit C₆-C₂₂-Mono- oder -Diaminen modifizierte Polyasparaginsäuren eingesetzt.

Kondensationsprodukte der Citronensäure mit Hydroxycarbonsäuren oder Polyhydroxyverbindungen als organische Builder sind z.B. bekannt aus WO-A 93/22362 und WO-A 92/16493. Solche Carboxylgruppen enthaltende Kondensate haben üblicherweise Molmassen bis zu 10000, vorzugsweise bis zu 5000.

Unter den als Bleichmittel dienenden, in Wasser H₂O₂ liefernden Verbindungen haben das Natriumperborattetrahydrat und das Natriumperboratmonohydrat besondere Bedeutung. Weitere brauchbare Bleichmittel sind beispielsweise Natriumpercarbonat, Peroxypyrophosphate, Citratperhydrate sowie H₂O₂ liefernde persaure Salze oder Persäuren, wie Perbenzoate, Peroxophthalate, Diperazelainsäure, Phthaloiminopersäure oder Diperdodecandisäure.

Um beim Waschen bei Temperaturen von 60 °C und darunter eine verbesserte Bleichwirkung zu erreichen, können Bleichaktivatoren in die Wasch- oder Reinigungsmittel eingearbeitet werden. Als Bleichaktivatoren können Verbindungen, die unter Perhydrolysebedingungen aliphatische Peroxocarbonsäuren mit vorzugsweise 1 bis 10 C-Atomen, insbesondere 2 bis 4 C-Atomen, und/oder gegebenenfalls substituierte Perbenzoesäure ergeben, eingesetzt werden. Geeignet sind Substanzen, die O- und/oder N-Acylgruppen der genannten C-Atomzahl und/oder gegebenenfalls substituierte Benzoylgruppen tragen. Bevorzugt sind mehrfach acylierte Alkylendiamine, insbesondere Tetraacetylethylendiamin (TAED), acylierte Triazinderivate, insbesondere 1 ,5-Diacetyl-2,4-dioxohexahydro-1 ,3,5-triazin (DADHT), acylierte Glykolurile, insbesondere Tetraacetylglykoluril (TAGU), N-Acylimide, insbesondere N-Nonanoylsuccinimid (NOSI), acylierte Phenolsulfonate, insbesondere n-Nonanoyl oder Isononanoyloxybenzolsulfonat (nbzw. iso-NOBS), Carbonsäureanhydride, insbesondere Phthalsäureanhydrid, acylierte mehrwertige Alkohole, insbesondere Triacetin, Ethylenglykoldiacetat und 2,5-Diacetoxy-2,5-dihydrofuran.

Zusätzlich zu den konventionellen Bleichaktivatoren oder an deren Stelle können auch sogenannte Bleichkatalysatoren in die Wasch- oder Reinigungsmittel eingearbeitet werden. Bei diesen Stoffen handelt es sich um bleichverstärkende Übergangsmetallsalze bzw. Übergangsmetallkomplexe wie beispielsweise Mn-, Fe-, Co-, Ru - oder Mo-Salenkomplexe oder -carbonylkomplexe. Auch Mn-, Fe-, Co-, Ru-, Mo-, Ti-, V- und Cu-Komplexe mit stickstoffhaltigen Tripod-Liganden sowie Co-, Fe-, Cu- und Ru-Aminkomplexe sind als Bleichkatalysatoren verwendbar.

Als Enzyme kommen insbesondere solche aus der Klassen der Hydrolasen wie der Proteasen, Esterasen, Lipasen bzw. lipolytisch wirkende Enzyme, Amylasen, Cellulasen bzw. andere Glykosylhydrolasen und Gemische der genannten Enzyme in Frage. Alle diese Hydrolasen tragen in der Wäsche zur Entfernung von Verfleckungen wie protein-, fett- oder stärkehaltigen Verfleckungen und Vergrauungen bei. Cellulasen und andere Glykosylhydrolasen können darüber hinaus durch das Entfernen von Pilling und Mikrofibrillen zur Farberhaltung und zur Erhöhung der Weichheit des Textils beitragen. Zur Bleiche bzw. zur Hemmung der Farbübertragung können auch Oxireduktasen eingesetzt werden. Besonders gut geeignet sind aus Bakterienstämmen oder Pilzen wie Bacillus subtilis, Bacillus licheniformis, Streptomyceus griseus und Humicola insolens gewonnene enzymatische Wirkstoffe. Vorzugsweise werden Proteasen vom Subtilisin-Typ und insbesondere Proteasen, die aus Bacillus lentus gewonnen werden, eingesetzt. Dabei sind Enzymmischungen, beispielsweise aus Protease und Amylase oder Protease und Lipase bzw. lipolytisch wirkenden Enzymen oder Protease und Cellulase oder aus Cellulase und Lipase bzw. lipolytisch wirkenden Enzymen oder aus Protease, Amylase und Lipase bzw. lipolytisch wirkenden Enzymen oder Protease, Lipase bzw. lipolytisch wirkenden Enzymen und Cellulase, insbesondere jedoch Protease und/oder Lipase-haltige Mischungen bzw. Mischungen mit lipolytisch wirkenden Enzymen von besonderem Interesse. Beispiele für derartige lipolytisch wirkende Enzyme sind die bekannten Cutinasen. Auch Peroxidasen oder Oxidasen haben sich in einigen Fällen als geeignet erwiesen. Zu den geeigneten Amylasen zählen insbesondere α-Amylasen, Iso-Amylasen, Pullulanasen und Pektinasen. Als Cellulasen werden vorzugsweise Cellobiohydrolasen, Endoglucanasen und β-Glucosidasen, die auch Cellobiasen genannt werden, bzw. Mischungen aus diesen eingesetzt. Da sich verschiedene Cellulase-Typen durch ihre CMCase und Avicelase-Aktivitäten unterscheiden, können durch gezielte Mischungen der Cellulasen die gewünschten Aktivitäten eingestellt werden.

Die Enzyme können an Trägerstoffe adsorbiert sein, um sie gegen vorzeitige Zersetzung zu schützen. Der Anteil der Enzyme, Enzymmischungen oder Enzymgranulate kann beispielsweise etwa 0,1 bis 5 Gew.-%, vorzugsweise 0,12 bis etwa 2,5 Gew.-% betragen.

Als Elektrolyte aus der Gruppe der anorganischen Salze kann eine breite Anzahl der verschiedensten Salze eingesetzt werden. Bevorzugte Kationen sind die Alkali- und Erdalkalimetalle, bevorzugte Anionen sind die Halogenide und Sulfate. Aus herstellungstechnischer Sicht ist der Einsatz von NaCl oder MgCl₂ in den Mitteln bevorzugt. Der Anteil an Elektrolyten in den Mitteln beträgt üblicherweise 0,5 bis 5 Gew.-%.

Nichtwässrige Lösungsmittel, die in den flüssigen Wasch- oder Reinigungsmitteln eingesetzt werden können, stammen beispielsweise aus der Gruppe ein- oder mehrwertigen Alkohole, Alkanolamine oder Glykolether, sofern sie im angegebenen Konzentrationsbereich mit Wasser mischbar sind. Vorzugsweise werden die Lösungsmittel ausgewählt aus Ethanol, n- oder i-Propanol, Butanolen, Glykol, Propan- oder Butandiol, Glycerin, Diglykol, Propyl- oder Butyldiglykol, Hexylenglycol, Ethylenglykolmethylether, Ethylenglykolethylether, Ethylenglykolpropylether, Ethylenglykolmono-n-butylether, Diethylenglykol-methylether, Diethylenglykolethylether, Propylenglykolmethyl-, -ethyloder -propylether, Dipropylenglykolmonomethyl- oder - ethylether, Di-isopropylenglykolmonomethyl- oder -ethylether, Methoxy-, Ethoxy- oder Butoxytriglykol, i-Butoxyethoxy-2-propanol, 3-Methyl-3-methoxybutanol, Propylen-glykol-t-butylether sowie Mischungen dieser Lösungsmittel. Nichtwässrige Lösungsmittel können in den flüssigen Wasch- oder Reinigungsmitteln in Mengen zwischen 0,5 und 15 Gew.-%, bevorzugt aber unter 12 Gew.-% und insbesondere unterhalb von 9 Gew.-% eingesetzt werden.

Um den pH-Wert der Wasch- oder Reinigungsmittel in den gewünschten Bereich zu bringen, kann der Einsatz von pH-Stellmitteln angezeigt sein. Einsetzbar sind hier sämtliche bekannten Säuren bzw. Laugen, sofern sich ihr Einsatz nicht aus anwendungstechnischen oder ökologischen Gründen bzw. aus Gründen des Verbraucherschutzes verbietet. Üblicherweise überschreitet die Menge dieser Stellmittel 7 Gew.-% der Gesamtformulierung nicht.

Um den ästhetischen Eindruck der Wasch- oder Reinigungsmittel zu verbessern, können sie mit geeigneten Farbstoffen eingefärbt werden. Bevorzugte Farbstoffe, deren Auswahl dem Fachmann keinerlei Schwierigkeit bereitet, besitzen eine hohe Lagerstabilität und Unempfindlichkeit gegenüber den übrigen Inhaltsstoffen der Mittel und gegen Licht sowie keine ausgeprägte Substantivität gegenüber Textilfasern, um diese nicht anzufärben.

Als Schauminhibitoren, die in den Wasch- oder Reinigungsmitteln eingesetzt werden können, kommen beispielsweise Seifen, Paraffine oder Silikonöle in Betracht, die gegebenenfalls auf Trägermaterialien aufgebracht sein können.

Geeignete Antiredepositionsmittel, die auch als "soil repellents" bezeichnet werden, sind beispielsweise nichtionische Celluloseether wie Methylcellulose und Methylhydroxypropylcellulose mit einem Anteil an Methoxygruppen von 15 bis 30 Gew.-% und an Hydroxypropylgruppen von 1 bis 15 Gew.-%, jeweils bezogen auf den nichtionischen Celluloseether. Geeignete Soil-Release-Polymere sind beispielsweise Polyester aus Polyethylenoxiden mit Ethylenglycol und/oder Propylenglycol und aromatischen Dicarbonsäuren oder aromatischen und aliphatischen Dicarbonsäuren; Polyester aus einseitig endgruppenverschlossenen Polyethylenoxiden mit zwei- und/oder mehrwertigen Alkoholen und Dicarbonsäure, insbesondere Polymere aus Ethylenterephthalaten und/oder Polyethylenglycolterephthalaten oder anionisch und/oder nichtionisch modifizierten Derivaten von diesen. Insbesondere bevorzugt von diesen sind die sulfonierten Derivate der Phthalsäure- und Terephthalsäure-Polymere. Derartige Polyester sind bekannt, beispielsweise aus US 3,557,039, GB-A 11 54 730, EP-A 0 185 427, EP-A 0 241 984, EP-A 0 241 985, EP-A 0 272 033 und US-A 5,142,020. Weitere geeignete Soil-Release-Polymere sind amphiphile Pfopf- oder Copolymere von Vinyl- und/oder Acrylestern auf Polyalkylenoxide (vgl. US 4,746,456, US 4,846,995, DE-A 37 11 299, US 4,904,408, US 4,846,994 und US 4,849,126) oder modifizierte Cellulosen wie z.B. Methylcellulose, Hydroxypropylcellulose oder Carboxymethylcellulose.

Optische Aufheller (sogenannte "Weißtöner") können den Wasch- oder Reinigungsmitteln zugesetzt werden, um Vergrauungen und Vergilbungen der behandelten textilen Flächengebilde zu beseitigen. Diese Stoffe ziehen auf die Faser auf und bewirken eine Aufhellung und vorgetäuschte Bleichwirkung, indem sie unsichtbare UI-traviolettstrahlung in sichtbares längerwelliges Licht umwandeln, wobei das aus dem Sonnenlicht absorbierte ultraviolette Licht als schwach bläuliche Fluoreszenz abgestrahlt wird und mit dem Gelbton der vergrauten bzw. vergilbten Wäsche reines Weiß ergibt. Geeignete Verbindungen stammen beispielsweise aus den Substanzklassen der 4,4'-Diamino-2,2'-stilbendisulfonsäuren (Flavonsäuren), 4,4'-Distyryl-biphenylen, Methylumbelliferone, Cumarine, Dihydrochinolinone, 1,3- Diarylpyrazoline, Naphthalsäureimide, Benzoxazol-, Benzisoxazol- und Benzimidazol-Systeme sowie der durch Heterocyclen substituierten Pyrenderivate. Die optischen Aufheller werden üblicherweise in Mengen zwischen 0,03 und 0,3 Gew.-%, bezogen auf das fertige Mittel, eingesetzt.

Vergrauungsinhibitoren haben die Aufgabe, den von der Faser abgelösten Schmutz in der Flotte suspendiert zu halten und so das Wiederaufziehen des Schmutzes zu verhindern. Hierzu sind wasserlösliche Kolloide meist organischer Natur geeignet, beispielsweise Leim, Gelatine, Salze von Ethersulfonsäuren der Stärke oder der Cellulose oder Salze von sauren Schwefelsäureestern der Cellulose oder der Stärke. Auch wasserlösliche, saure Gruppen enthaltende Polyamide sind für diesen Zweck geeignet. Weiterhin lassen sich lösliche Stärkepräparate und andere als die obengenannten Stärkeprodukte verwenden, zum Beispiel abgebaute Stärke, Aldehydstärken usw. Auch Polyvinylpyrrolidon ist brauchbar. Bevorzugt werden jedoch Celluloseether wie Carboxymethylcellulose (Na-Salz), Methylcellulose, Hydroxyalkylcellulose und Mischether wie Methylhydroxyethylcellulose, Methylhydroxypropylcellulose, Methylcarboxymethylcellulose und deren Gemische in Mengen von 0,1 bis 5 Gew.-%, bezogen auf die Mittel, eingesetzt.

Da textile Flächengebilde, insbesondere aus Reyon, Zellwolle, Baumwolle und deren Mischungen, zum Knittern neigen können, weil die Einzelfasern gegen Durchbiegen, Knicken, Pressen und Quetschen quer zur Faserrichtung empfindlich sind, können die Mittel synthetische Knitterschutzmittel enthalten. Hierzu zählen beispielsweise synthetische Produkte auf der Basis von Fettsäuren, Fettsäureestern, Fettsäureamiden, Fettalkylolestern, Fettalkylolamiden oder Fettalkoholen, die meist mit Ethylenoxid umgesetzt sind, oder Produkte auf der Basis von Lecithin oder modifizierter Phosphorsäureester.

Zur Bekämpfung von Mikroorganismen können die Wasch- oder Reinigungsmittel antimikrobielle Wirkstoffe enthalten. Hierbei unterscheidet man je nach antimikrobiellem Spektrum und Wirkungsmechanismus zwischen Bakteriostatika und Bakteriziden, Fungistatika und Fungiziden usw. Wichtige Stoffe aus diesen Gruppen sind beispielsweise Benzalkoniumchloride, Alkylarylsulfonate, Halogenphenole und Phenolmercuriacetat.

Um unerwünschte, durch Sauerstoffeinwirkung und andere oxidative Prozesse verursachte Veränderungen an den Wasch- oder Reinigungsmitteln und/oder den behandelten textilen Flächengebilden zu verhindern, können die Mittel Antioxidantien enthalten. Zu dieser Verbindungsklasse gehören beispielsweise substituierte Phenole, Hydrochinone, Brenzcatechine und aromatische Amine sowie organische Sulfide, Polysulfide, Dithiocarbamate, Phosphite und Phosphonate.

Ein erhöhter Tragekomfort kann aus der zusätzlichen Verwendung von Antistatika resultieren, die den Mitteln zusätzlich beigefügt werden. Antistatika vergrößern die Oberflächenleitfähigkeit und ermöglichen damit ein verbessertes Abfließen gebildeter Ladungen. Äußere Antistatika sind in der Regel Substanzen mit wenigstens einem hydrophilen Molekülliganden und geben auf den Oberflächen einen mehr oder minder hygroskopischen Film. Diese zumeist grenzflächenaktiven Antistatika lassen sich in stickstoffhaltige (Amine, Amide, quartäre Ammoniumverbindungen), phosphorhaltige (Phosphorsäureester) und schwefelhaltige (Alkylsulfonate, Alkylsulfate) Antistatika unterteilen. Externe Antistatika sind beispielsweise in den Patentanmeldungen FR 1,156,513, GB 873 214 und GB 839 407 beschrieben. Die hier offenbarten Lauryl-(bzw. Stearyl-) dimethylbenzylammoniumchloride eignen sich als Antistatika für textile Flächengebilde bzw. als Zusatz zu Waschmitteln, wobei zusätzlich ein Avivageeffekt erzielt wird.

Zur Verbesserung des Wasserabsorptionsvermögens, der Wiederbenetzbarkeit der behandelten textilen Flächengebilde und zur Erleichterung des Bügelns der behandelten textilen Flächengebilde können in den Wasch- oder Reinigungsmitteln beispielsweise Silikonderivate eingesetzt werden. Diese verbessern zusätzlich das Ausspülverhalten der Mittel durch ihre schauminhibierenden Eigenschaften. Bevorzugte Silikonderivate sind beispielsweise Polydialkyl- oder Alkylarylsiloxane, bei denen die Alkylgruppen ein bis fünf C-Atome aufweisen und ganz oder teilweise fluoriert sind. Bevorzugte Silikone sind Polydimethylsiloxane, die gegebenenfalls derivatisiert sein können und dann aminofunktionell oder quatemiert sind bzw. Si-OH-, Si-H und/oder Si-Cl-Bindungen aufweisen. Die Viskositäten der bevorzugten Silikone liegen bei 25 °C im Bereich zwischen 100 und 100 000 mPas, wobei die Silikone in Mengen zwischen 0,2 und 5 Gew.-%, bezogen auf das gesamte Mittel eingesetzt werden können.

Schließlich können die Wasch- oder Reinigungsmittel auch UV-Absorber enthalten, die auf die behandelten textilen Flächengebilde aufziehen und die Lichtbeständigkeit der Fasern verbessern. Verbindungen, die diese gewünschten Eigenschaften aufweisen, sind beispielsweise die durch strahlungslose Desaktivierung wirksamen Verbindungen und Derivate des Benzophenons mit Substituenten in 2- und/oder 4-Stellung. Weiterhin sind auch substituierte Benzotriazole, in 3-Stellung Phenyl substituierte Acrylate (Zimtsäurederivate), gegebenenfalls mit Cyanogruppen in 2-Stellung, Salicylate, organische Ni-Komplexe sowie Naturstoffe wie Umbelliferon und die körpereigene Urocansäure geeignet.

Um die durch Schwermetalle katalysierte Zersetzung bestimmter Waschmittel-Inhaltsstoffe zu vermeiden, können Stoffe eingesetzt werden, die Schwermetalle komplexieren. Geeignete Schwermetallkomplexbildner sind beispielsweise die Alkalisalze der Ethylendiamintetraessigsäure (EDTA), der Nitrilotriessigsäure (NTA) oder Methylglycindiessigsäure (MGDA) sowie Alkalimetallsalze von anionischen Polyelektrolyten wie Polymaleaten und Polysulfonaten.

Eine bevorzugte Klasse von Komplexbildnern sind die Phosphonate, die in bevorzugten Wasch- oder Reinigungsmitteln in Mengen von 0,01 bis 2,5 Gew.-%, vorzugsweise 0,02 bis 2 Gew.-% und insbesondere von 0,03 bis 1 ,5 Gew.-% enthalten sind. Zu diesen bevorzugten Verbindungen zählen insbesondere Organophosphonate wie beispielsweise 1-Hydroxyethan-1 ,1-diphosphonsäure (HEDP), Aminotri(methylenphosphonsäure) (ATMP), Diethylentriamin-penta(methylenphosphonsäure) (DTPMP bzw. DETPMP) sowie 2-Phosphonobutan-1,2,4-tricarbonsäure (PBS-AM), die zumeist in Form ihrer Ammonium- oder Alkalimetallsalze eingesetzt werden.

Neben diesen Bestandteilen kann ein Wasch- oder Reinigungsmittel dispergierte Partikel, deren Durchmesser entlang ihrer größten räumlichen Ausdehnung 0,01 bis 10 000 µm beträgt, enthalten.

Partikel können Mikrokapseln als auch Granulate, Compounds und Duftperlen sein, wobei Mikrokapseln bevorzugt sind.

Unter dem Begriff "Mikrokapsel" werden Aggregate verstanden, die mindestens einen festen oder flüssigen Kern enthalten, der von mindestens einer kontinuierlichen Hülle, insbesondere einer Hülle aus Polymer(en), umschlossen ist. Üblicherweise handelt es sich um mit filmbildenden Polymeren umhüllte feindisperse flüssige oder feste Phasen, bei deren Herstellung sich die Polymere nach Emulgierung und Koazervation oder Grenzflächenpolymerisation auf dem einzuhüllenden Material niederschlagen. Die mikroskopisch kleinen Kapseln lassen sich wie Pulver trocknen. Neben einkernigen Mikrokapseln sind auch mehrkernige Aggregate, auch Mikrosphären genannt, bekannt, die zwei oder mehr Kerne im kontinuierlichen Hüllmaterial verteilt enthalten. Ein- oder mehrkernige Mikrokapseln können zudem von einer zusätzlichen zweiten, dritten etc. Hülle umschlossen sein. Bevorzugt sind einkernige Mikrokapseln mit einer kontinuierlichen Hülle. Die Hülle kann aus natürlichen, halbsynthetischen oder synthetischen Materialien bestehen. Natürlich Hüllmaterialien sind beispielsweise Gummi arabicum, Agar Agar, Agarose, Maltodextrine, Alginsäure bzw. ihre Salze, z.B. Natrium- oder Calciumalginat, Fette und Fettsäuren, Cetylalkohol, Collagen, Chitosan, Lecithine, Gelatine, Albumin, Schellack, Polysaccharide, wie Stärke oder Dextran, Sucrose und Wachse. Halbsynthetische Hüllmaterialien sind unter anderem chemisch modifizierte Cellulosen, insbesondere Celluloseester und -ether, z.B. Celluloseacetat, Ethylcellulose, Hydroxypropylcellulose, Hydroxypropylmethylcellulose und Carboxymethylcellulose, sowie Stärkederivate, insbesondere Stärkeether und -ester. Synthetische Hüllmaterialien sind beispielsweise Polymere wie Polyacrylate, Polyamide, Polyvinylalkohol oder Polyvinylpyrrolidon. Im Inneren der Mikrokapseln können empfindliche, chemisch oder physikalisch inkompatible sowie flüchtige Komponenten (= Wirkstoffe) des wässrigen flüssigen Wasch- oder Reinigungsmittels lager- und transportstabil eingeschlossen werden. In den Mikrokapseln können sich beispielsweise optische Aufheller, Tenside, Komplexbildner, Bleichmittel, Bleichaktivatoren, Färbung, Duftstoffe, Antioxidantien, Gerüststoffe, Enzyme, Enzym-Stabilisatoren, antimikrobielle Wirkstoffe, Vergrauungsinhibitoren, Antiredepositionsmittel, pH-Stellmittel, Elektrolyte, Schauminhibitoren und UV-Absorber befinden.

Die Mikrokapseln können ferner kationische Tenside, Vitamine, Proteine, Konservierungsmittel, Waschkraftverstärker oder Periglanzgeber enthalten. Die Füllungen der Mikrokapseln können Feststoffe oder Flüssigkeiten in Form von Lösungen oder Emulsionen bzw. Suspensionen sein.

Die Mikrokapseln können im herstellungsbedingten Rahmen eine beliebige Form aufweisen, sie sind jedoch bevorzugt näherungsweise kugelförmig. Ihr Durchmesser entlang ihrer größten räumlichen Ausdehnung kann je nach den in ihrem Inneren enthaltenen Komponenten und der Anwendung zwischen 0,01 µm (visuell nicht als Kapsel erkennbar) und 10 000 µm liegen. Bevorzugt sind sichtbare Mikrokapseln mit einem Durchmesser im Bereich von 100 µm bis 7 000 µm, insbesondere von 400 µm bis 5 000 µm. Die Mikrokapseln sind nach bekannten Verfahren zugänglich, wobei der Koazervation und der Grenzflächenpolymerisation die größte Bedeutung zukommt. Als Mikrokapseln lassen sich sämtliche auf dem Markt angebotenen tensidstabilen Mikrokapseln einsetzen, beispielsweise die Handelsprodukte (in Klammern angegeben ist jeweils das Hüllmaterial) Hallcrest Microcapsules (Gelatine, Gummi Arabicum), Coletica Thalaspheres (maritimes Collagen), Lipotec Millicapseln (Alginsäure, Agar-Agar), Induchem Unispheres (Lactose, mikrokristalline Cellulose, Hydroxypropylmethylcellulose); Unicerin C30 (Lactose, mikrokristalline Cellulose, Hydroxypropylmethylcellulose), Kobo Glycospheres (modifizierte Stärke, Fettsäureester, Phospholipide), Softspheres (modifiziertes Agar Agar) und Kuhs Probiol Nanospheres (Phospholipide).

Alternativ können auch Partikel eingesetzt werden, die keine Kern-Hülle-Struktur aufweisen, sondern in denen der Wirkstoff in einer Matrix aus einem matrixbildenden Material verteilt ist. Solche Partikel werden auch als "Speckies" bezeichnet.

Ein bevorzugtes matrixbildendes Material ist Alginat. Zur Herstellung Alginat-basierter Speckies wird eine wässrige Alginat-Lösung, welche auch den einzuschließenden Wirkstoff bzw. die einzuschließenden Wirkstoffe enthält, vertropft und anschließend in einem Ca²⁺-Ionen oder Al³⁺-Ionen enthaltendem Fällbad ausgehärtet.

Alternativ können anstelle von Alginat andere, matrixbildende Materialien eingesetzt werden. Beispiele für matrixbildende Materialien umfassen Polyethylenglykol, Polyvinylpyrrolidon, Polymethacrylat, Polylysin, Poloxamer, Polyvinylalkohol, Polyacrylsäure, Polyethylenoxid, Polyethoxyoxazolin, Albumin, Gelatine, Acacia, Chitosan, Cellulose, Dextran, Ficoll®, Stärke, Hydroxyethylcellulose, Hydroxypropylcellulose, Hydroxypropylmethylcellulose, Hyaluronsäure, Carboxymethylcellulose, deacetyliertes Chitosan, Dextransulfat und Derivate dieser Materialien. Die Matrixbildung erfolgt bei diesen Materialien beispielsweise über Gelierung, Polyanion-Polykation-Wechselwirkungen oder Polyelektrolyt-Metallion-Wechselwirkungen. Die Herstellung von Partikeln mit diesen matrixbildenden Materialien ist an sich bekannt.

Die Freisetzung der Wirkstoffe aus den Mikrokapseln oder Speckies erfolgt üblicherweise während der Anwendung der sie enthaltenden Mittel durch Zerstörung der Hülle bzw. der Matrix infolge mechanischer, thermischer, chemischer oder enzymatischer Einwirkung.

Die Erfindung wird durch die folgenden Beispiele näher veranschaulicht.

### Beispiel 1: Copolymerisation von Methacrylamidoethyl-gluconamid (MEGA) mit Methacrylsäure

Die Copolymerisation erfolgte bei 60 °C unter N₂. Zuerst löste man 43 g (0,142 mol) MEGA in Wasser, um eine 25 Gew.-%ige Lösung zu erhalten. Man gab 0,5 g (0,5 Gew.-%, bezogen auf die Monomere) 2-Mercaptoethanol als Kettentransfermittel zu. Zu dieser Lösung dosierte man über eine Zeitspanne von 4 h parallel zwei Zuläufe: 58,4g (0,6780 mol) Methacrylsäure gelöst in 36 g Methanol; und 1 g 2,2'-Azobis[2-(2-imidazolin-2-yl)propan]dihydrochlorid (VAKO-44) als Initiator, gelöst in 60 g Wasser. Nach beendeter Zugabe wurde die Polymerisation 1 h fortgesetzt.

Man erhielt ein Copolymer mit 100% Monomerumsatz (nachgewiesen mittels ¹H NMR-Spektrum) und einem K-Wert nach Fikentscher von 14 als hochviskose Lösung im Methanol/Wasser-Reaktionsmedium. Dieses Copolymer wurde mit wässriger NaOH- Lösung neutralisiert. Das neutralisierte Copolymer löst sich im Wasser.

### Beispiel 2: Copolymerisation von Methacrylamidoethyl-gluconamid (MEGA) mit Natriummethacrylat

Die Copolymerisation erfolgte bei 60 °C unter N₂. Zuerst löste man 45 g (0,147 mol) MEGA in Wasser, um eine 15 Gew.-%ige Lösung zu erhalten. Man gab 0,26 g (0,35 Gew.-%, bezogen auf die Monomere) 2-Mercaptoethanol als Kettentransfermittel zu. Zu dieser Lösung dosierte man über eine Zeitspanne von 5 h parallel zwei Zuläufe: 30 g (0,349 mol) Natriummethacrylat gelöst in 60g Wasser; und 0,75 g 2,2'-Azobis[2-(2-imidazolin-2-yl)propan]dihydrochlorid (VAKO-44) als Initiator (1 Gew.-%, bezogen auf die Monomere), gelöst in 60 g Wasser. Nach beendeter Zugabe wurde die Polymerisation 1 h fortgesetzt.

Man erhielt ein Copolymer mit 90% Monomerumsatz (nachgewiesen mittels ¹H NMR-Spektrum) und einem K-Wert nach Fikentscher von 50, als leicht viskose Lösung im wässrigen Reaktionsmedium.

### Beispiel 3: Copolymerisation von MEGA with Methylacrylat und Polyethylenglycolmonomethylether-methacrylat (MPEGMA)

Die Copolymerisation erfolgte bei 60 °C unter N₂. Zuerst löste man 60 g (0,196 mol) MEGA in Wasser, um eine 25 Gew.-%ige Lösung zu erhalten. Man gab 0,25 g (0,25 Gew.-%, bezogen auf die Monomere) 2-Mercaptoethanol als Kettentransfermittel zu. Zu dieser Lösung dosierte man über eine Zeitspanne von 4 h parallel zwei Zuläufe: (i) 20 g (0,2323 mol) Methylacrylat, gelöst in 54 g Methanol und 20 g MPEGMA (Molekulargewicht 1098) (0,0182mol), gelöst in 35 g Wasser; und (ii) 1 g (1 Gew.-%, bezogen auf die Monomere) 2,2'-Azobis[2-(2-imidazolin-2-yl)propan]dihydrochlorid (VAKO-44) als Initiator, gelöst in 74 g Wasser/Methanol (1/1 Gew./Gew.). Nach beendeter Zugabe wurde die Polymerisation 1 h fortgesetzt.

Man erhielt ein Copolymer mit 100% Monomerumsatz (nachgewiesen mittels ¹H NMR-Spektrum) und einem K-Wert nach Fikentscher von 21.

### Beispiel 4: Copolymerisation von MEGA with Methylacrylat und Polyethylenglycolmonomethylether-methacrylat (MPEGMA)

Die Copolymerisation erfolgte bei 60 °C unter N₂. Zuerst löste man 60 g (0,196 mol) MEGA in Wasser, um eine 25 Gew.-%ige Lösung zu erhalten. Man gab 0,05 g (0,05 Gew.-%, bezogen auf die Monomere) 2-Mercaptoethanol als Kettentransfermittel zu. Zu dieser Lösung dosierte man über eine Zeitspanne von 4 h parallel zwei Zuläufe: (i) 20 g (0,2323 mol) Methylacrylat, gelöst in 54 g Methanol und 20 g MPEGMA (Molekulargewicht 1098) (0,0182mol), gelöst in 35 g Wasser; und (ii) 1 g (1 Gew.-%, bezogen auf die Monomere) 2,2'-Azobis[2-(2-imidazolin-2-yl)propan]dihydrochlorid (VAKO-44) als Initiator, gelöst in 74 g Wasser/Methanol (1/1 Gew./Gew.). Nach beendeter Zugabe wurde die Polymerisation 1 h fortgesetzt.

Man erhielt ein Copolymer mit 100% Monomerumsatz (nachgewiesen mittels ¹H NMR-Spektrum) und einem K-Wert nach Fikentscher von 35.

### Beispiel 5: Copolymerisation von MEGA with Natrimmethylacrylat (NaMA) und Polyethylenglycolmonomethylether-methacrylat (MPEGMA) (60:20:20 Gew.-%)

Die Copolymerisation erfolgte bei 60 °C unter N₂. Zuerst löste man 45 g (0,147 mol) MEGA in Wasser, um eine 20 Gew.-%ige Lösung zu erhalten. Man gab 0,26 g (0,35 Gew.-%, bezogen auf die Monomere) 2-Mercaptoethanol als Kettentransfermittel zu. Zu dieser Lösung dosierte man über eine Zeitspanne von 4 h parallel zwei Zuläufe: (i) 15 g (0,174 mol) Natriummethylacrylat, gelöst in 60 g Wasser und 15 g MPEGMA (Molekulargewicht 1098) (0,0136mol), gelöst in 60 g Wasser; und (ii) 0,75 g (1 Gew.-%, bezogen auf die Monomere) 2,2'-Azobis[2-(2-imidazolin-2-yl)propan]dihydrochlorid (VAKO-44) als Initiator, gelöst in 60 g Wasser. Nach beendeter Zugabe wurde die Polymerisation 1 h fortgesetzt.

Man erhielt ein Copolymer mit 100% Monomerumsatz (nachgewiesen mittels ¹H NMR-Spektrum) und einem K-Wert nach Fikentscher von 39.

### Beispiel 6: Copolymerisation von MEGA mit Methylacrylat (MA), MPEGMA und Methacrylamidopropyltrimethylammonium-chlorid (MAPTAC)

Die Copolymerisation erfolgte bei 75 °C unter N₂. Zuerst löste man 40 g (0,1312 mol) MEGA in Wasser, um eine 25 Gew.-%ige Lösung zu erhalten. Man gab 1 g (1 Gew.-%, bezogen auf die Monomere) 2-Mercaptoethanol als Kettentransfermittel zu. Zu dieser Lösung dosierte man über eine Zeitspanne von 4 h parallel drei Zuläufe: (i) 25 g (0,2919 mol) Methylacrylat, gelöst in 54 g Methanol; (ii) 30 g (0,0274 mol) MPEGMA (Molekulargewicht 1098), gelöst in 50 g Wasser und 5 g MAPTAC (0,0456 mol), gelöst in 74 g Wasser; und (iii) 2 g (2 Gew.-%, bezogen auf die Monomere) 2,2'-Azobis[2-(2-imidazolin-2-yl)propan]dihydrochlorid (VAKO-44) als Initiator, gelöst in 74 g Wasser/Methanol (1/1 Gew./Gew.). Nach beendeter Zugabe wurde die Polymerisation 1 h fortgesetzt.

Man erhielt ein Copolymer mit 100% Monomerumsatz (nachgewiesen mittels ¹H NMR-Spektrum) und einem K-Wert nach Fikentscher von 22. Mn: 6800, Mw: 19400.

### Beispiel 7: Copolymerisation von Glucose-1ß-ethylacrylat (GEA) mit Hydroxyethylacrylat

GEA und 2-Hydroxyethylacrylat (Molverhältnis 1:1) mit einer Gesamtmasse von etwa 1,5 g wurde in 30 mL siedendem Wasser gelöst. Man gab 0,2 mL (NH₄)₂S₂O₈ (12% in Wasser) und 0,2 mL K₂S₂O₅ (6% in Wasser) als Initiatoren zu. Man stellte das Reaktionsgemisch in ein Ölbad bei 50 °C. Die Polymerisation wurde 20 h unter Stickstoff fortgesetzt. Anschließend fällte man das Polymer in Aceton und trocknete bei 50 °C im Vakuum.

Man erhielt ein Copolymer mit 80% Monomerumsatz (Gewichtsvergleich der eingesetzten Monomere und des erhaltenen Polymers). Die Polymerstruktur wurde durch ¹H-und ¹³C-NMR-Spektren bestätigt.

### Beispiel 8: Adsorptionsversuche an Cellulose

Die Versuche erfolgten mit der Quarzmikrowaagen-Technik. Man verwendete eine Quarzmikrowaage QCM-D D (Q-Sense, Västra Frölunda, Schweden). Das Verfahren basiert auf der Eigenfrequenzänderung einer piezoelektrischen Quarzkristallscheibe, sobald diese mit einer Fremdmasse beladen wird. Die Oberfläche des Quarzes kann durch Spin-Coating oder Bedampfen modifiziert sein. In einer Messzelle befindet sich der Schwingquarz. Aus einem Vorlagegefäß wird die zu untersuchende Lösung in die Messzelle gepumpt. Die Pumpgeschwindigkeit wird während der Messzeit konstant bei 250 µl/min gehalten und es wird darauf geachtet werden, dass Schläuche und Messzelle frei von Luftblasen sind. Jeder Versuch beginnt mit der Aufnahme der Basislinie in VE-Wasser, bezüglich dessen alle Frequenz- und Dissipationsmesswerte als Nullpunkt gesetzt werden.

In diesem Beispiel wurde ein Cellulose-beschichteter QCM-D-Quarz (Low-charged Microfibrillar Cellulose, Dicke etwa 6 nm, Oberflächenrauigkeit 3-4 nm RMS (gemäß AFM), Haftvermittler: Poly(ethylenimin)) verwendet.

Man untersuchte wässrige Polymerlösungen mit einer Polymerkonzentration von 10 ppm, 100 ppm und 1000 ppm. Aus den Messdaten wurde die gebundene Masse Polymer berechnet. Die Ergebnisse sind in der folgenden Tabelle zusammengefasst:

**Tabelle 1: Adsorption von Copolymeren an Cellulose**

| Bsp. | Monomere | Konzentration [ppm] | Adsorbierte Masse [ng/cm²] |
|---|---|---|---|
| 6 | MEGA/MA/MPEGMA/MAPTAC (40/25/30/5 Gew.-%) | 10 | n.n. |
| | | 100 | n.n. |
| | | 1000 | 20 |
| 3 | MEGA/MA/MPEGMA (60/20/20 Gew.-%) | 10 | 50 |
| | | 100 | 750 |
| | | 1000 | 750 |
| 4 | MEGA/MA/MPEGMA (60/20/20 Gew.-%) | 10 | n.n. |
| | | 100 | 100 |
| | | 1000 | 950 |

| | | | |
|---|---|---|---|
| n.n. = nicht nachgewiesen | | | |

### Beispiel 9: Adsorptionsversuche an Edelstahl

Man verwendete eine Anordnung wie in Beispiel 5. In diesem Beispiel wurde ein Sensor mit 50 nm Edelstahlbeschichtung (SS2343) verwendet. Man untersuchte wässrige Polymerlösungen mit einer Polymerkonzentration von 100 ppm und 1000 ppm. Die Ergebnisse sind in der folgenden Tabelle zusammengefasst:

**Tabelle 2: Adsorption von Copolymeren an Edelstahl**

| Bsp. | Monomere | Konzentration [ppm] | Adsorbierte Masse [ng/cm²] |
|---|---|---|---|
| 6 | MEGA/MA/MPEGMA/MAPTAC (40/25/30/5 Gew.-%) | 100 | 225 |
| | | 1000 | 275 |
| 3 | MEGA/MA/MPEGMA (60/20/20 Gew.-%) | 100 | 450 |
| | | 1000 | 500 |

### Beispiel 10: Untersuchung der Protein-Abstoßung von Polymer-belegten Oberflächen

Für die Untersuchung der Protein-Abstoßung durch einen auf Cellulose adsorbierten Polymerfilm von MEGA/MA/MPEGMA (Beispiel 3) wurde dieses aus einer wässrigen Lösung mit einer Konzentration von 500 ppm über 2,5 h adsorbiert, wie in Beispiel 8 beschrieben. Nach dem Spülen mit Wasser wurde die Lösung, die die Messzelle durchströmte, auf eine wässrige Lösung von 0,1 g/L bovines Serum-Albumin (BSA) umgestellt. Bei der Umstellung auf BSA beobachtete man keine Frequenzänderung, d.h. es wurde kein BSA adsorbiert.

## Patentansprüche

1. Wasserlösliches oder wasserdispergierbares Copolymer, enthaltend einpolymerisierte Einheiten
a) wenigstens eines ethylenisch ungesättigten Monomers mit einer Saccharid-Seitengruppe und
b) wenigstens eines von (Meth)acrylamid verschiedenen, hydrophilen ethylenisch ungesättigten Monomers,
wobei der Gewichtsanteil der ethylenisch ungesättigten Monomere mit einer Saccharid-Seitengruppe 5 bis 95 Gew.-% beträgt, und
wobei das ethylenisch ungesättigten Monomer mit einer Saccharid-Seitengruppe einer der Formeln (Ia), (Ib) oder (Ic) entspricht 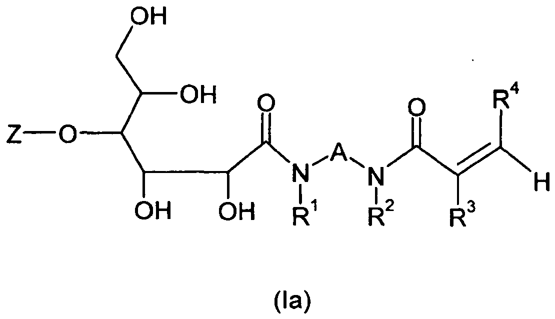 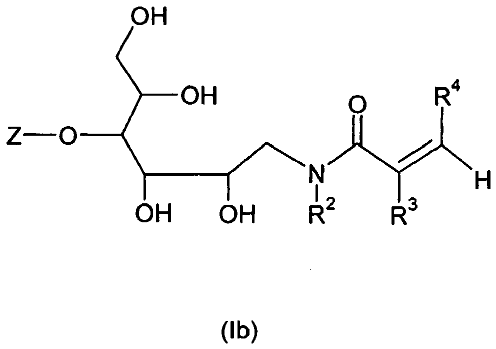 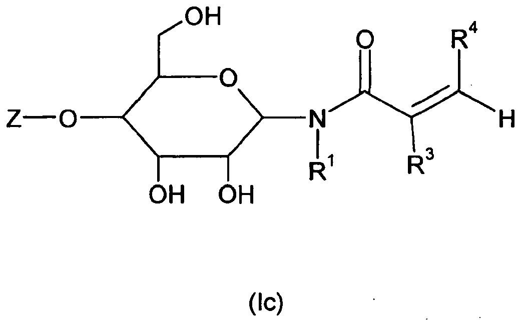 worin
Z für H oder einen Saccharidrest steht;
A für C₂-C₁₀-Alkylen, das gegebenenfalls durch Sauerstoff in Etherfunktion unterbrochen sein kann und/oder durch ein oder zwei Carboxyl, Hydroxyl und/oder Carboxamidgruppen substituiert sein kann, oder einen cycloaliphatischen Rest steht;
R¹ und R² unabhängig voneinander für Wasserstoff, C₁-C₄-Alkyl oder C₁-C₄-Hydroxyalkyl stehen;
R³ für H oder Methyl steht;
R⁴ für H, COOH oder COO⁻M⁺ steht; und
M⁺ für ein Alkalimetallion oder ein Ammoniumion steht.

2. Copolymer nach Anspruch 1, wobei das hydrophile ethylenisch ungesättigte Monomer ausgewählt ist unter
b1) Methylacrylat;
b2) anionischen/anionogen Monomeren;
b3) kationischen/kationogenen Monomeren;
b4) Monomeren mit einer Hydroxyalkyl-Seitengruppe;
b5) Monomeren mit einer Polyether-Seitengruppe;
b6) N-Vinylverbindungen; und
Kombinationen davon.

3. Copolymer nach Anspruch 2, wobei das anionische/anionogene Monomer unter ethylenisch ungesättigten Carbonsäuren, Sulfonsäuren, Phosphonsäuren oder Phosphorsäureestern und Salzen davon ausgewählt ist.

4. Copolymer nach Anspruch 3, wobei die ethylenisch ungesättigte Carbonsäure ausgewählt ist unter Acrylsäure, Methacrylsäure, Itaconsäure und Maleinsäure.

5. Copolymer nach Anspruch 3, wobei die ethylenisch ungesättigte Sulfonsäure ausgewählt ist unter 2-Propen-1-sulfonsäure, 2-Sulfoethylmethacrylat, 3-Sulfopropylacrylat, Vinylsulfonsäure, 2-Acrylamido-2-methylpropansulfonsäure.

6. Copolymer nach Anspruch 3, wobei die ethylenisch ungesättigte Phosphonsäure oder der ethylenisch ungesättigte Phosphorsäureester ausgewählt ist unter Vinylphosphonsäure und Acryloxyethylmonophosphorsäureester.

7. Copolymer nach einem der Ansprüche 2 bis 6, wobei das Monomer mit einer Polyether-Seitengruppe die allgemeine Formel aufweist
R-O-(CH₂-CHR'-O)ₙ-CO-CR"=CH₂
worin R für H oder C₁-C₃₀-Alkyl steht,
R' für Wasserstoff oder Methyl steht,
R" für Wasserstoff oder Methyl steht, und
n für eine ganze Zahl von 2 bis 100 steht.

8. Copolymer nach einem der Ansprüche 2 bis 6, wobei die N-Vinylverbindung unter N-Vinyllactamen und N-Vinylamiden gesättigter C₁-C₈-Monocarbonsäuren ausgewählt ist.

9. Verwendung eines Copolymers nach einem der vorhergehenden Ansprüche als schmutzablösevermögender und/oder vergrauungsinhibierender Wirkstoff in Textilwaschmitteln.

10. Verwendung eines Copolymers nach einem der Ansprüche 1 bis 8 als antimikrobielle Beschichtung.

11. Textilwaschmittelzusammensetzung, enthaltend ein Copolymer nach einem der Ansprüche 1 bis 8.

## Claims

1. A water-soluble or water-dispersible copolymer comprising copolymerized units
a) of at least one ethylenically unsaturated monomer with a saccharide side group and
b) of at least one hydrophilic ethylenically unsaturated monomer different from (meth)acrylamide,
where the weight fraction of the ethylenically unsaturated monomers with a saccharide side group is 5 to 95% by weight, and
where the ethylenically unsaturated monomer with a saccharide side group corresponds to one of the formulae (Ia), (Ib) or (Ic) 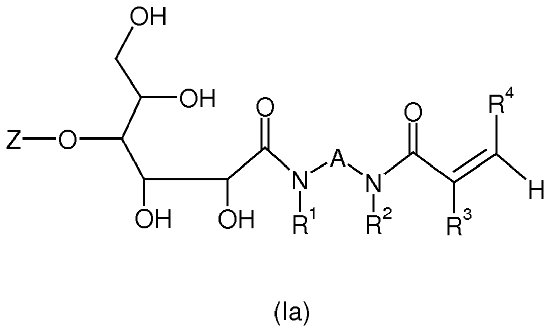 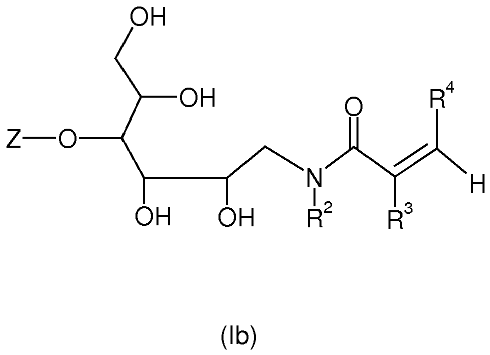 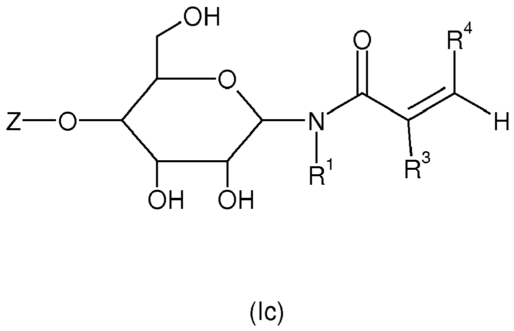 in which
Z is H or a saccharide radical;
A is C₂-C₁₀-alkylene which may optionally be interrupted by oxygen in ether function and/or may be substituted by one or two carboxyl, hydroxyl and/or carboxamide groups, or is a cycloaliphatic radical;
R¹ and R², independently of one another, are hydrogen, C₁-C₄-alkyl or C₁-C₄-hydroxyalkyl;
R³ is H or methyl;
R⁴ is H, COOH or COO⁻M⁺; and
M⁺ is an alkali metal ion or an ammonium ion.

2. The copolymer according to claim 1, where the hydrophilic ethylenically unsaturated monomer is selected from
b1) methyl acrylate;
b2) anionic/anionogenic monomers;
b3) cationic/cationogenic monomers;
b4) monomers with a hydroxyalkyl side group;
b5) monomers with a polyether side group;
b6) N-vinyl compounds; and
combinations thereof.

3. The copolymer according to claim 2, where the anionic/anionogenic monomer is selected from ethylenically unsaturated carboxylic acids, sulfonic acids, phosphonic acids or phosphoric acid esters and salts thereof.

4. The copolymer according to claim 3, where the ethylenically unsaturated carboxylic acid is selected from acrylic acid, methacrylic acid, itaconic acid and maleic acid.

5. The copolymer according to claim 3, where the ethylenically unsaturated sulfonic acid is selected from 2-propene-1-sulfonic acid, 2-sulfoethyl methacrylate, 3-sulfopropyl acrylate, vinylsulfonic acid, 2-acrylamido-2-methylpropanesulfonic acid.

6. The copolymer according to claim 3, where the ethylenically unsaturated phosphonic acid or the ethylenically unsaturated phosphoric acid ester is selected from vinylphosphonic acid and acryloxyethyl mono-phosphoric acid ester.

7. The copolymer according to any one of claims 2 to 6, where the monomer with a polyether side group has the general formula
R-O- (CH₂-CHR'-O)ₙ-CO-CR"=CH₂
in which R is H or C₁-C₃₀-alkyl,
R' is hydrogen or methyl,
R" is hydrogen or methyl, and
n is an integer from 2 to 100.

8. The copolymer according to any one of claims 2 to 6, where the N-vinyl compound is selected from N-vinyllactams and N-vinylamides of saturated C₁-C₈-monocarboxylic acids.

9. The use of a copolymer according to any one of the preceding claims as soil release and/or graying-inhibiting active ingredient in textile detergents.

10. The use of a copolymer according to any one of claims 1 to 8 as antimicrobial coating.

11. A textile detergent composition comprising a copolymer according to any one of claims 1 to 8.

## Revendications

1. Copolymère soluble ou dispersible dans l'eau, contenant des unités copolymérisées
a) d'au moins un monomère éthyléniquement insaturé comprenant un groupe latéral saccharide et
b) d'au moins un monomère éthyléniquement insaturé hydrophile, différent d'un (méth)acrylamide,
la proportion pondérale des monomères éthyléniquement insaturés présentant un groupe latéral saccharide valant 5 à 95% en poids, et
le monomère éthyléniquement insaturé présentant un groupe latéral saccharide correspondant à une des formules (Ia), (Ib) ou (Ic) 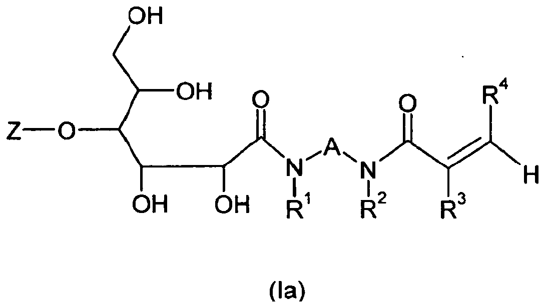 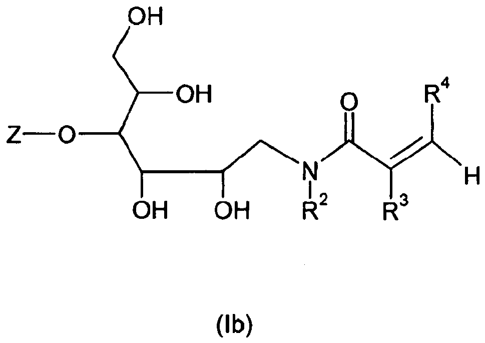 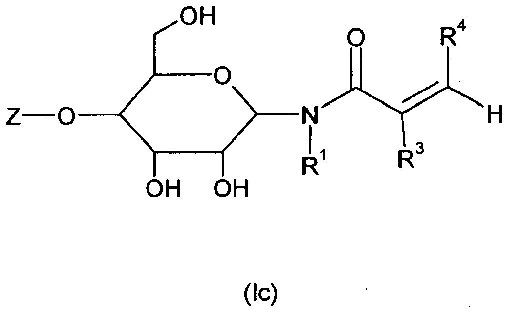 où
Z représente H ou un radical saccharide ;
A représente C₂-C₁₀-alkylène, qui peut le cas échéant être interrompu par oxygène en fonction éther et/ou qui peut être substitué par un ou deux groupes carboxyle, hydroxyle et/ou carboxamide ou représente un radical cycloaliphatique ;
R¹ et R² représentent, indépendamment l'un de l'autre, hydrogène, C₁-C₄-alkyle ou C₁-C₄-hydroxyalkyle ;
R³ représente H ou méthyle ;
R⁴ représente H, COOH ou COO⁻M⁺ ; et
M⁺ représente un ion de métal alcalin ou un ion d'ammonium.

2. Copolymère selon la revendication 1, le monomère éthyléniquement insaturé hydrophile étant choisi parmi
b1) l'acrylate de méthyle ;
b2) les monomères anioniques/anionogènes ;
b3) les monomères cationiques/cationogènes ;
b4) les monomères présentant un groupe latéral hydroxylalkyle ;
b5) les monomères présentant un groupe latéral polyéther ;
b6) les composés N-vinyle ; et
leurs combinaisons.

3. Copolymère selon la revendication 2, le monomère anionique/anionogène étant choisi parmi les acides carboxyliques, les acides sulfoniques, les acides phosphoniques ou les esters d'acide phosphorique, éthyléniquement insaturés et leurs sels.

4. Copolymère selon la revendication 3, l'acide carboxylique éthyléniquement insaturé étant choisi parmi l'acide acrylique, l'acide méthacrylique, l'acide itaconique et l'acide maléique.

5. Copolymère selon la revendication 3, l'acide sulfonique éthyléniquement insaturé étant choisi parmi l'acide 2-propène-1-sulfonique, le méthacrylate de 2-sulfoéthyle, l'acrylate de 3-sulfopropyle, l'acide vinylsulfonique, l'acide 2-acrylamido-2-méthylpropanesulfonique.

6. Copolymère selon la revendication 3, l'acide phosphonique éthyléniquement insaturé ou l'ester de l'acide phosphorique éthyléniquement insaturé étant choisi parmi l'acide vinylphosphonique et les esters de l'acide acryloxyéthylmonophosphorique.

7. Copolymère selon l'une quelconque des revendications 2 à 6, le monomère présentant un groupe latéral polyéther présentant la formule générale
R-O-(CH₂-CHR'-O)ₙ-CO-CR"=CH₂ où
R représente H ou C₁-C₃₀-alkyle,
R¹ représente hydrogène ou méthyle,
R" représente hydrogène ou méthyle et
n vaut un nombre entier de 2 à 100.

8. Copolymère selon l'une quelconque des revendications 2 à 6, le composé de N-vinyle étant choisi parmi les N-vinyllactames et les N-vinylamides d'acides C₁-C₈-monocarboxyliques saturés.

9. Utilisation d'un copolymère selon l'une quelconque des revendications précédentes comme substance active capable de détacher les souillures et/ou inhibant le grisaillement dans les agents de lavage de textiles.

10. Utilisation d'un copolymère selon l'une quelconque des revendications 1 à 8 comme revêtement antimicrobien.

11. Composition d'agent de lavage de textiles, contenant un copolymère selon l'une quelconque des revendications 1 à 8.
